# EUROPÄISCHE PATENTSCHRIFT

(11) **EP 3 018 785 B1**
(45) Veröffentlichungstag und Bekanntmachung des Hinweises auf die Patenterteilung: **28.11.2018**
(21) Anmeldenummer: 15195852.7
(22) Anmeldetag: 28.09.2012
(51) Int. Cl.: H02J 3/14, H02J 3/30

(54) **ENERGIESPEICHERANLAGE**
ENERGY STORAGE SYSTEM
INSTALLATION DE STOCKAGE D'ÉNERGIE

(43) Veröffentlichungstag der Anmeldung: 11.05.2016
(62) Teilanmeldung aus: 12186472.2
(73) Patentinhaber: Enrichment Technology Company Ltd. Zweigniederlassung Deutschland, 52409 Jülich (DE)
(72) Erfinder: vor dem Esche, Rainer, 52525 Heinsberg (DE); Schäfer, Christoph, 52072 Aachen (DE); Treppmann, Christoph, 52074 Aachen (DE)
(74) Vertreter: Jostarndt Patentanwalts-AG

(56) Entgegenhaltungen:
- EP-A1- 2 495 800
- EP-A2- 1 523 119
- WO-A1-2012/036799
- DE-A1-102009 043 380
- US-A1- 2004 263 116
- US-A1- 2008 219 171
- US-B2- 8 008 804
- MATHIAS USLAR ET AL: "What is the CIM lacking?", INNOVATIVE SMART GRID TECHNOLOGIES CONFERENCE EUROPE (ISGT EUROPE), 2010 IEEE PES, IEEE, PISCATAWAY, NJ, USA, 11. Oktober 2010 (2010-10-11), Seiten 1-8, XP031803729, ISBN: 978-1-4244-8508-6

## Beschreibung

### Gebiet der Erfindung

Die Erfindung bezieht sich auf eine Energiespeicheranlage geeignet zur simultanen Ausführung von Regel- und Systemaufgaben in nicht-lokalen und lokalen Stromnetzen und auf ein Verfahren zum Betreiben einer solchen Energiespeicheranlage.

### Hintergrund der Erfindung

Die Energie zum Betrieb eines Stromnetzes wird von diversen unterschiedlichen Kraftwerktypen geliefert. Hierbei sind die meisten Kraftwerke, wie beispielsweise Atomkraftwerke, Kohlekraftwerke, Gaskraftwerke, Windenergie-, Biogasanlagen oder Solarkraftwerke, lediglich Energieerzeuger zur Einspeisung von Energie in das nicht-lokale Stromnetz. Nicht-lokale Stromnetze sind beispielsweise Übertragungsnetze oder Verteilnetze, wie beispielsweise in Deutschland durch Amprion, 50Hertz, Tennet und TransnetEnBW betrieben. Diese Übertragungsnetze sind Teil des europäischen Verbundnetzes. Die oben angeführten Kraftwerke können als reine Energieerzeuger keine überschüssige Energie im Bedarfsfall aus dem Stromnetz aufnehmen und speichern. Energiespeicher können dagegen zur Aufnahme und Abgabe von Energie an ein Stromnetz verwendet werden. Energiespeicher sind beispielsweise zentrale Energiespeicher wie Pumpspeicherwerke oder dezentrale Energiespeicher wie beispielsweise Batterien oder Schwungradspeicher. Die Pumpspeicherwerke stellen weitgehend witterungsunabhängige und damit in der Regel immer verfügbare Energiespeicher dar. Zentrale Energiespeicher sind im Allgemeinen auf eine große Kapazität ausgelegt. Zur Bereitstellung von Regelenergie für das nicht-lokale Stromnetz sind sie aufgrund der verfügbaren Leistung geeignet, um im nicht-lokalen Stromnetz entsprechend Wirkung entfalten zu können. Pumpspeicherkraftwerke können je nach Baugröße eine Leistung von einigen 100 MW und mehr besitzen, wobei die Generatoren allerdings meist dazu ausgelegt sind, unter Volllast Strom zu produzieren und somit die volle Leistung des Pumpspeicherwerks bei entsprechendem Wirkungsgrad zeitnah nutzen zu können. Diese Betriebsweise ist nicht dafür geeignet, die Netzqualität in einem kleinen lokalen Stromnetz mit einem im Vergleich zur Kapazität des Pumpspeicherkraftwerks eher vernachlässigbarem Strombedarf zu stabilisieren oder zu verbessern.

Zentrale genutzte Batteriespeicheranlagen sind im Aufbau mit dem Ziel, einen Pilotbetrieb für netzstabilisierende (ortsungebundene) Aufgaben (Regelenergie) zu realisieren. Die bisher geplanten erfüllen jedoch keine ortsgebundenen Aufgaben. Grundsätzlich sind Batteriespeicher jedoch aufgrund ihrer immanenten Zusammenhänge zwischen Leistung, Kapazität und Alterung für derartige Anwendungen mit mehreren Lastzyklen pro Tag nicht gut geeignet und degradieren schnell aufgrund von Temperatureinflüssen, Systemausfällen und Fehlbedienung. Daher sind Batteriespeicher sehr wartungsintensiv. Außerdem stellen Batteriespeicher wegen ihres hohen Brand- und Chemierisiko eine Umwelt- und/oder Wassergefährdung dar, die einen enormen Absicherungsaufwand erfordern.

US 8,008,804 B2 offenbart ein Verfahren zur Regelung der Wechselspannung in einem Wechselspannungs-Verteilungsnetz, wobei dazu ein Energiespeichersystem FESS an ein Verteilungsnetz als überregionales Übertragungsnetz angeschlossen ist und ein oder mehrere Schwungradenergiespeicher umfasst. Das Energiespeichersystem wird dabei ausschließlich zur Frequenzregulierung im Verteilungsnetz mittels Energieeinspeisung oder Energieabgabe verwendet.

Dezentrale Energiespeicher sind im Allgemeinen optimiert für die Stabilisierung des lokalen Strombedarfs und für die Lieferung von Regelenergie zur Stützung des nicht-lokalen Stromnetzes nicht ausgelegt und nicht qualifiziert. Eine Verschaltung der dezentralen Speicher zu einer nicht lokal und lokal wirkenden Anlage erfolgt bisher nicht.

Es wäre daher wünschenswert, eine effektive Energiespeicheranlage zur Verfügung zu haben, die gleichzeitig eine Verbesserung von lokaler Netzqualität und die Versorgungssicherheit für nicht-lokale Stromnetze ermöglicht und somit als Energiespeicheranlage mit genügender Wirkung für beide Zwecke betrieben werden kann.

### Zusammenfassung der Erfindung

Es ist eine Aufgabe der vorliegenden Erfindung, eine effektive Energiespeicheranlage bereitzustellen, mit der eine gleichzeitige Verbesserung von lokaler Netzqualität und die Versorgungssicherheit für nicht-lokale Stromnetze ermöglicht werden.

Diese Aufgabe wird gelöst durch eine Energiespeicheranlage mit den Merkmalen des Anspruchs 1.

Durch den Einsatz der Energiespeicheranlage als dezentraler Zwischenspeicher mit jeweiligen Anschlüssen an lokale und/oder nicht-lokale Stromnetze kann die lokale Netzqualität durch ortsgebundene Regel- und Systemaufgaben vor Ort verbessert werden und gleichzeitig wird für nicht ortsgebundene Regel- und Systemaufgaben dem nicht-lokalen Stromnetz positive Energie (Einspeisung in das Netz) oder negative Energie (Abnahme von Energie aus dem Netz) zur Stromnetzregelung bereitgestellt. Durch die gleichzeitige Verarbeitung ortsgebundener und nicht ortsgebundener Aufgaben und die entsprechende simultane Steuerung aller angeschlossenen Stromnetze können die Bedürfnisse in angeschlossenen lokalen und nicht-lokalen Stromnetzen gleichzeitig und effizient erfüllt werden. Ferner kann die Anlagenspeicherkapazität und Anlagenleistung durch die Kombination von ortsgebundenen und nicht ortsgebundenen Bedürfnissen effektiv ausgenutzt werden (effektive Energiespeicheranlage) und hilft somit Ressourcen zu sparen. Hierbei kann die Energiespeicheranlage entweder jeweils direkt mit einem nicht-lokalen Stromnetz und ein oder mehreren lokalen Stromnetzen verbunden sein oder die Energiespeicheranlage kann über ein angeschlossenes lokales Stromnetz indirekt mit einem nicht-lokalen Stromnetz verbunden sein, sofern das lokale Stromnetz Teil des nicht-lokalen Stromnetzes ist, das heißt mit dem nicht-lokalen Stromnetz verbunden ist. Ortsgebundene Regel- und Systemaufgaben sind beispielsweise die Sicherstellung der benötigten lokalen Netzspannung, die Blindleistungskompensation durch Regelung der Amplituden- und Phasenlage des Spannungssignals, das Bereitstellung einer lokalen Leistungsreserve für sich eventuell hinzuschaltende größere Stromabnehmer oder Einschaltstromspitzen und das Speichern von lokalen Energieüberschussmengen. Nicht ortsgebundene Regel- und Systemaufgaben sind beispielsweise die Bereitstellung von primärer oder sekundärer Regelleistung. Die Regelleistung (auch Reserveleistung) gewährleistet die Versorgung der Stromkunden mit genau der benötigten elektrischen Leistung bei unvorhergesehenen Ereignissen im Stromnetz. Dazu können kurzfristig Leistungsanpassungen bei regelfähigen Kraftwerken durchgeführt werden und schnell anlaufende Kraftwerke oder Energiespeicher wie die erfindungsgemäße Energiespeicheranlage eingesetzt werden. Die primäre Regelleistung dient dazu, Ungleichgewichte zwischen physikalischem Leistungsangebot und Leistungsnachfrage mit Ziel der Wiederherstellung einer stabilen Netzfrequenz auszugleichen. Die sekundäre Regelleistung soll das Gleichgewicht zwischen physikalischem Stromangebot und Stromnachfrage nach dem Auftreten einer Differenz wieder herstellen, wobei im Gegensatz zur Primärregelung nur die Situation in der jeweiligen Regelzone inklusive des Stromaustausches mit anderen Regelzonen betrachtet wird. Weitere nicht ortsgebundene Regel- und Systemaufgaben sind außerdem die Bereitstellung von Energiespeicheranlagen zur Unterstützung eines Schwarzstartes, die allgemeine Speicherung von Leistungsspitzen, und die Blindleistungskompensation für die Steigerung der Übertragungsleistung in einem nicht-lokalen Stromnetz. Weitere ortsgebundene oder nicht ortsgebundene Regel- und Systemaufgaben für lokale- und/oder nicht-lokale Stromnetze sind die Bereitstellung von Redundanz (Ausfallsicherheit) bei der Stromversorgung in Kombination mit den bereits vorhandenen Energielieferanten und ein Blindleistungmanagement.

Hierbei bezeichnet das nicht-lokale Stromnetz ein Stromnetz, das sich regional oder überregional über sehr große Gebiete erstreckt und in dem die nicht ortsgebundenen Regel- und Systemaufgaben durchgeführt werden. Nicht-lokale Stromnetze sind beispielsweise Übertragungs- oder Verteilnetze (öffentliches Stromnetz). Das öffentliche Stromnetz in Deutschland setzt sich beispielsweise aus vier Übertragungsnetzen und vielen Verteilnetzen zusammen. Die Übertragungsnetze werden zum Beispiel von den Netzbetreibern Amprion, 50Hertz, Tennet und TransnetzEnBW betrieben. Diese vier Übertragungsnetze bilden zusammen den Netzregelverbund für Deutschland. In anderen Ländern werden entsprechende Übertragungsnetze durch andere Netzbetreiber betrieben. In den Übertragungsnetzen wird die Frequenz des Stromnetzes stabil gehalten (Frequenzregulierung). Das übergeordnete europäische Verbundnetz aus den jeweiligen Übertragungsnetzen in den einzelnen Staaten ist ebenfalls als nicht-lokales Stromnetz anzusehen, wofür allerdings derzeit nur die Standards für die Regelenergie festgelegt sind. Die nicht ortsgebundenen Regel- und Systemaufgaben werden in den jeweiligen Übertragungsnetzen durchgeführt. Als lokales Stromnetz im Sinne der Erfindung werden die Stromnetze bezeichnet, in denen die vorstehend beschriebenen ortsgebundenen Regel- und Systemaufgaben durchgeführt werden. Lokale Stromnetze sind in der Regel räumlich stark begrenzt, beispielsweise ein betriebsinternes Stromnetz auf einer Betriebsanlage oder ein Stromnetz innerhalb eines Hauses oder Gebäudekomplexes.

Der Begriff "Empfangen" bezeichnet alle Arten von Vorgängen, bei denen Daten zur Energiespeicheranlagen hin übertragen werden. Diese Übertragung kann über das Kommunikationsnetzwerk erfolgen, wozu die Energiespeicheranlage eine oder mehrere entsprechende Schnittstellen umfasst. Die Daten können aber auch über eine andere Schnittstelle der Energiespeicheranlage von einem Datenträger per Auslesen in einem entsprechenden Datenträgerlaufwerk (beispielsweise einer CD-ROM) oder über eine Datenträgerschnittstelle (beispielsweise von einem USB-Datenstick) empfangen werden. Alternativ können die Daten auch per Direkteingabe über eine entsprechende Benutzerschnittstelle (Bildschirm und Tastatur) empfangen werden. Die zu empfangenden Daten sind beispielsweise die ortsgebundenen und/oder nicht ortsgebundenen Regel- und Systemaufgaben.

Die Energiespeicheranlage ist hier in einer Ausführungsform an ein nicht-lokales Stromnetz und an ein oder mehrere lokale Stromnetze angeschlossen. Hier werden die ortsgebundenen und nicht ortsgebundenen Regel- und Systemaufgaben in den jeweiligen angeschlossenen Stromnetzen separat ausgeführt. In einer anderen Ausführungsform ist die Energiespeicheranlage lediglich an ein oder mehrere lokale Stromnetze angeschlossen, von denen zumindest ein lokales Stromnetz mit dem nicht lokalen Stromnetz verbunden ist. In diesem Fall werden die ortsgebundenen Regel- und Systemaufgaben in den jeweiligen lokalen Stromnetzen ausgeführt und die nicht ortsgebundenen Regel- und Systemaufgaben werden über das angeschlossene lokale Stromnetz, das mit dem nicht-lokalen Stromnetz verbunden ist, in dem nicht-lokalen Stromnetz ausgeführt. In gewissen Betriebszuständen, beispielsweise bei Ausfall eines oder mehrerer Stromnetze kann eine Energiespeicheranlage aus Sicherheitsgründen auch vom nicht-lokalen Stromnetz völlig getrennt sein. Diese Trennung kann beispielsweise zeitlich beschränkt vorliegen. Dasselbe kann auch gegenüber dem oder den lokalen Stromnetzen vorkommen.

Die erfindungsgemäße Energiespeicheranlage kann dabei jede geeignete Energiespeicheranlage sein, die aufgrund ihrer Speichereigenschaften und Speicherparameter in der Lage ist, neben den ortsgebundenen Regel- und Systemaufgaben zusätzlich nicht ortsgebundene Regel- und Systemaufgaben in nicht lokalen Netzen über Bereitstellung primärer oder sekundärer Regelleistung zu übernehmen. Geeignete Energiespeicheranlagen sind beispielsweise lokale (dezentrale) Druckluftspeicher oder Wasserstoffspeicher in Kombination mit Brennstoffzellen, Batteriesysteme oder kinematische Energiespeicher wie beispielsweise Schwungradenergiespeicher. Die Energiespeicheranlage kann dabei lediglich ein einzelnes Energiespeichermodul oder eine Mehrzahl an Energiespeichermodulen umfassen. Als Energiespeichermodul wird die funktionelle Einheit verstanden, die an ein internes Stromnetz der Energiespeicheranlage Energie abgeben oder aus ihm aufnehmen kann. In einer Ausführungsform umfasst das Energiespeichermodul ein oder mehrere Schwungradenergiespeicher zur reversiblen Speicherung von Energie innerhalb der Energiespeicheranlage. Diese Speicherung ist als reversibel bezeichnet, da aus den Schwungradspeichern je nach Bedarf die als Rotationsenergie gespeicherte Energie wieder entnommen und als elektrische Energie von der Energiespeicheranlage in ein Stromnetz eingespeist werden kann und im umgekehrten Fall elektrische Energie aus dem Stromnetz entnommen und in der Energiespeicheranlage mechanisch in Form von Rotationsenergie in den Schwungsradspeichern gespeichert werden. Schwungradenergiespeicher besitzen den Vorzug, dass sie die aufzunehmenden oder abzugebenden Mengen an Energie sehr variabel, mit geringen Reaktionszeiten und präzise für die Abnehmer bereitstellen können und diese Energie in Form von mechanischer Energie speichern. Damit stellen Schwungradenergiespeicher ein wesentlich kleineres Gefahrenpotential im Brandfall dar als beispielsweise eine größere Ansammlung an Batterien, zusammengeschaltet als Batterie-Energiespeicheranlage oder Wasserstoffspeicheranlagen mit Wasserstofftanks mit dem brennbaren Wasserstoff als Gefahrenpotential. In Druckluftspeicheranlagen können dagegen zwar nicht-brennbare Gase zur Energiespeicherung verwendet werden, dennoch besitzen die Drucklufttanks ein Explosionspotential aufgrund des hohen Drucks in den Drucklufttanks. Somit stellen Schwungradenergiespeicher als Energiespeicheranlagen eine umweltsicherere Technologie für die Energiebereitstellung im Vergleich zu anderen Speichertechnologien dar und sind für beliebig viele Lastzyklen pro Tag gut geeignet. Bei der Energiebereitstellung wird von negativer Energiebereitstellung gesprochen, wenn Energie aus dem Stromnetz aufgenommen und im Schwungradenergiespeicher in Form von mechanischer Rotationsenergie gespeichert wird. Entsprechend wird von positiver Energiebereitstellung gesprochen, wenn aus den Schwungradenergiespeicher in Form von mechanischer Rotationsenergie gespeicherte Energie mittels Abbremsen der Schwungräder (oder Rotoren) in das Stromnetz eingespeist wird. Hierbei ist die Fähigkeit von Schwungradspeichern, Energie innerhalb von wenigen Millisekunden zur Verfügung stellen zu können, ebenso vorteilhaft, wie die Fähigkeit, die spezifizierte Leistung über einen Zeitraum von mehreren Minuten zu liefern.

Die Energiespeicheranlage kann dabei modular aus ein oder mehreren Energiespeichermodulen mit jeweils ein oder mehreren Schwungradenergiespeichern aufgebaut sein. Durch den modularen Aufbau kann sowohl die Speicherkapazität der Energiespeicheranlage als auch die Leistung an den Bedarf angepasst und gegebenenfalls deutlich erweitert werden. Im Falle eines modularen Aufbaus mit mehreren Energiespeichermodulen in einer lokalen Energiespeicheranlage sind diese Module mittels eines gemeinsamen Aufschaltpunkt als Gesamtheit mit den angeschlossenen Stromnetzen über geeignete Komponenten innerhalb der Energiespeicheranlage verbunden. In einer Ausführungsform umfasst die Energiespeicheranlage mehrere Energiespeichermodule, von denen jedes Energiespeichermodul eine Modulsteuereinheit zur Ausführung von durch die Steuereinheit den einzelnen Energiespeichermodulen über entsprechende Datenverbindungen zugewiesenen Aufgaben im Rahmen der ortsgebundenen und nicht ortsgebundenen Regel- und Systemaufgaben umfassen kann. Die Modulsteuereinheit kann wie die Steuereinheit der Energiespeicheranlage ausgeführt sein, könnte aber aufgrund ihrer auf die Energiespeichermodule beschränkte Funktionalität auch einfacher und mit kleinerem oder ohne Datenspeicher ausgeführt werden. Der Anschluss der lokalen Energiespeicheranlage an das nicht-lokale Stromnetz und jeweils an ein oder mehrere lokale Stromnetze kann vom Fachmann geeignet ausgestaltet werden, wobei der Anschluss so ausgestaltet ist, dass die Stromnetze (nicht-lokales und lokale(s)) unabhängig voneinander von der Energiespeicheranlage mit Energie versorgt oder aus den Stromnetzen Energie abgenommen werden kann.

Die Steuereinheit bezeichnet eine Komponente in der Energiespeicheranlage, die die Energiespeicheranlage steuert, d.h., die die gewünschten Betriebszustände und Betriebsparameter einstellt und die die Energiespeicheranlage entsprechend eines Betriebsplans, der die gewünschten Betriebszustände als Funktion der Zeit enthält, steuert. Dem Betriebsplan liegen zumindest die ortsgebundenen Regel- und Systemaufgaben zugrunde, zu denen die nicht ortsgebundenen Regel- und Systemaufgaben hinzukommen oder hinzukommen können. Des Weiteren ist die Steuereinheit in der Lage, auf sich verändernde Verhältnisse im lokalen Stromnetz entsprechend zu reagieren und mittels Energieeinspeisung oder Energieaufnahme die Netzqualität des lokalen Stromnetzes zu erhöhen oder konstant zu halten oder bei einer Störung im lokalen Stromnetz die Netzqualität wieder zu verbessern. Die ortsgebundenen und nicht ortsgebundenen Regel- und Systemaufgaben von externen Systemen können hierbei über das Kommunikationsnetzwerk an die Energiespeicheranlage übermittelt und somit von dieser empfangen werden. Externe Systeme sind hier beispielsweise Steuerungssysteme des lokalen Stromnetzes für ortsgebundene Regel- und Systemaufgaben und/oder Steuerungssysteme des nicht-lokalen Stromnetzes, einer übergeordneten Verbundsteuerung oder lokaler Messstellen für ortsgebundene und/oder nicht ortsgebundene Regel- und Systemaufgaben. Alternativ können die externen Systeme symbolisch für Anweisungen durch die Betreiber der lokalen und/oder nicht lokalen Stromnetze stehen, die von der Energiespeicheranlage empfangen werden. Die empfangenen Anweisungen entsprechen den ortsgebundenen und/oder nicht ortsgebundenen Regel- und Systemaufgaben für die Energiespeicheranlage. Zusätzlich zu den Regel- und Systemaufgaben im lokalen Stromnetz kann die Steuereinheit Befehle, Anweisungen etc. von einer externen (nicht-lokalen) Steuereinheit für das nicht-lokale Stromnetz empfangen und diese Befehle oder Anweisungen parallel zu den ortsgebundenen Regel- und Systemaufgaben ausführen. Der Begriff "ausführen" bezeichnet hierbei das Steuern der Energiespeicheranlage durch die Steuereinheit gemäß der vorliegenden ortsgebundenen und nicht ortsgebundenen Regel- und Systemaufgaben für die angeschlossenen Stromnetze. Die externe (nicht-lokale) Steuereinheit regelt dabei den Bedarf von Regelenergie für das nicht-lokale Stromnetz und kann diesen Bedarf im Rahmen der freien (nicht für ortsgebundenen Regel- und Systemaufgaben benötigte) Kapazitäten der Energiespeicheranlagen in Form von nicht ortsgebundenen Regel- und Systemaufgaben von der Energiespeicheranlage über das Kommunikationsnetz anfordern. Weitere externe Systeme, von denen die Energiespeicheranlage nicht ortsgebundene Regel- und Systemaufgaben empfangen könnte, können beispielsweise ein Leistungsstützungsverbund oder eine Strombörse sein, anhand derer Einspeisungen oder Energieabnahmen in bestimmten Betriebszeiten entsprechend günstig sind. Weitere externe Größen für nicht ortsgebundene Regel- und Systemaufgaben sind beispielsweise der Blindleistungsbedarf, eine Spitzenlastkompensation oder benötigter lokaler Speicherbedarf im nicht-lokalen Stromnetz.

Dabei ist die Steuereinheit über die Energiespeicheranlage mit mindestens einer Schnittstelle über das Kommunikationsnetz mit der externen Steuereinheit verbunden. Das Kommunikationsnetz kann geeignet ausgestaltet sein. Beispielsweise ist das Kommunikationsnetz ein funkbasiertes Netz, ein Mobilfunknetz, eine Hochverfügbarkeitsverbindung oder ein Netz nach IECG. Alternativ könnte das Kommunikationsnetz auch als ein kabelgebundenes Telefonnetz oder über ein Computernetz (beispielsweise das Internet) ausgestaltet sein. Das Kommunikationsnetzwerk kann auch mehrere unterschiedliche Arten von Netzwerken (Sub-Kommunikationsnetze) umfassen. In einer Ausführungsform umfasst die Energiespeicheranlage mehrere Schnittstellen zu Sub-Kommunikationsnetzen im Kommunikationsnetzwerk und ist dazu ausgestaltet, im Falle einer unterbrochenen Verbindung die Verbindung über ein im Kommunikationsnetzwerk vorhandenes alternatives Sub-Kommunikationsnetz wieder herzustellen. Durch das Vorhandensein mehrerer Sub-Kommunikationsnetze im Kommunikationsnetzwerk wird die Ausfallgefahr des gesamten Kommunikationsnetzwerkes deutlich verringert, da bei Ausfall einer Netzwerkart alternative Netzwerkarten für die ungestörte Kommunikation zur Steuereinheit zur Verfügung stehen. Durch die Redundanz im Kommunikationsnetzwerk ist es möglich, über das alternative Sub-Kommunikationsnetz eine möglicherweise wichtige Aktualisierung der nicht ortsgebundenen Regel- und Systemaufgaben zu empfangen. Mögliche Sub-Kommunikationsnetze sind dabei funkbasierte, kabelbasierte oder stromgebundene Kommunikationsnetze wie beispielsweise über das Mobilfunknetz, über das Internet, über das normale Telefonnetz oder über eine Datenverbindung mittels der Stromkabel im Stromnetz.

In einer Ausführungsform ist die Energiespeicheranlage dazu vorgesehen, periodisch ein Testsignal über das Kommunikationsnetzwerk auszusenden und ein entsprechendes Rücksignal zu empfangen, wobei das Empfangen des Rücksignals die bestehende Verbindung zum Kommunikationsnetzwerk belegt. Ein solches Testsignal ist beispielsweise ein so genannter digitaler Handschlag, über den das Bestehen der Kommunikationsverbindung geprüft wird. Hierzu sendet die Steuereinheit ein Datenpaket zu einem externen angeschlossenen System aus und erhält als Reaktion über das Kommunikationsnetzwerk daraufhin ein entsprechendes Datenpaket (Rückantwort) zurück übermittelt. Die erfolgte Absendung und erhaltene Rückantwort wird von der Steuereinheit protokolliert und auf einem geeigneten Datenspeicher abgespeichert, beispielsweise auf einem Server. Alternativ kann der vorstehend beschriebene digitale Handschlag auch von einem externen System über das Kommunikationsnetzwerk initiiert werden. Auf diese Weise wird jederzeit festgestellt, ob eine Kommunikation mit der Steuereinheit zum Empfangen von nicht ortsgebundenen Regel- und Systemaufgaben möglich ist. Insofern kann eine unterbrochene Kommunikation nicht als nicht erfolgte Aktualisierung der nicht ortsgebundenen Regel- und Systemaufgaben mit einem entsprechenden Fortfahren der letzten Regel- und Systemaufgabe missverstanden werden. Daher ist in einer weiteren Ausführungsform die Energiespeicheranlage während einer nicht vorhandenen Verbindung zum Kommunikationsnetzwerk zur ausschließlichen Durchführung der ortsgebundenen Regel- und Systemaufgaben für das oder die jeweiligen lokalen Stromnetze vorgesehen. Bei unterbrochener Kommunikation könnte eine andere Regel- und Systemaufgabe notwendig sein. Daher beschränkt sich die lokale Steuereinheit bei unterbrochener Kommunikation auf die ortsgebundenen Regel- und Systemaufgaben. Die Bevorzugung ortsgebundener Regel- und Systemaufgaben bei gestörter Kommunikation mit der zentralen Steuereinheit ist vorteilhaft, da nach einem Ausfall der Kommunikation nach extern die Steuereinheit keine Rückmeldung mehr über den augenblicklichen Zustand des nicht-lokalen Stromnetzes bekommt. Sofern die Steuereinheit einfach die vorliegenden Aufgaben ohne weiter zu empfangende Rückmeldungen abarbeiten würde, könnte dies in besonderen Umständen sogar zu einem Ausfall des Stromnetzes infolge von Überlastung führen. Daher ist es vorteilhaft, im Falle gestörter Kommunikationswege nach extern nur die ortsgebundenen Regel- und Systemaufgaben durchzuführen, zu denen der Energiespeicher verpflichtet ist und der die Zweckmäßigkeit dieser ortsgebundenen Aufgaben gegebenenfalls über eigene Messeinheiten selbst überwachen kann. Die ortsgebundenen Aufgaben können gegebenenfalls vor Ort über Änderung im Aufgabenspeicher geändert werden. Für das nicht-lokale Stromnetz kann diese so nicht durchgeführt werden, da die Bedürfnisse des nicht-lokalen Stromnetzes auch von den Eingriffen anderer Kraftwerke, Verbraucher- oder Speicheranlagen abhängen, über die nur eine externe Steuereinheit die Übersicht hat.

In einer Ausführungsform können mehrere erfindungsgemäße Energiespeicheranlagen an räumlich unterschiedlichen Positionen angeordnet und an das gleiche nicht-lokale Stromnetz und an jeweils unterschiedliche lokale Stromnetze angeschlossen sind. Die räumlich unterschiedlichen Positionen erlauben eine Verteilung der Energiespeicheranlagen über größere Gebiete oder Regionen, so dass eine nicht-lokale Bereitstellung von Energie an das nicht-lokale Stromnetz auch jeweils ortsnah erfolgen kann. Im Gegensatz dazu müsste die Energie, die beispielsweise durch ein großes Pumpspeicherwerk bereitgestellt wird gegebenenfalls über weite Strecken im nicht-lokalen Stromnetz bis zum Verbraucher transportiert werden. Bei einer geographisch verteilten Aufstellung der Energiespeicheranlagen kann zumindest ein Teil der benötigten Energie ortsnahe am Verbraucher ins nicht-lokale Stromnetz eingespeist werden.

Gemäß der Erfindung umfasst die Energiespeicheranlage ein oder mehrere Messeinheiten zur Messung ein oder mehrerer relevanter Daten im jeweiligen angeschlossenen lokalen Stromnetz und die Steuereinheit ist dazu vorgesehen, die Steuerung der Energiespeicheranlage für die ortsgebundenen Regel- und Systemaufgaben in diesem lokalen Stromnetz auf Basis der gemessenen relevanten Daten auszuführen. Die Messeinheiten können dabei im lokalen Stromnetz integriert oder an ein oder mehreren Stellen am lokalen Stromnetz angeordnet sein. Die Messeinheiten können auch am Verbindungspunkt zwischen der Energiespeicheranlage und dem lokalem Stromnetz angeordnet sein. Messeinheiten im Rahmen der vorliegenden Erfindung sind beispielsweise Messsonden zur Messung der Netzfrequenz und Netzspannung als Beispiel für relevante Daten für das angeschlossene lokale Stromnetz. Weitere Messgrößen sind beispielsweise der Spannungsverlauf als Funktion der Zeit, der Phasenwinkel, der Sternpunkt, die Netzfrequenz, der Netzstrom und andere Größen. Der Fachmann kann im Rahmen der vorliegenden Erfindung geeignete Messeinheiten oder Messsonden auswählen und an der geeigneten Position anordnen. Sei beispielsweise die gewünschte Netzfrequenz 50 Hz und stellen die Messeinheiten ein Absinken der Netzfrequenz fest, so wird die Steuereinheit automatisch auf Basis der aktuellen gemessenen Netzfrequenz (als gemessene relevante Daten) und einer in der Steuereinheit hinterlegten Reaktionsfolge Energie in das lokale Stromnetz einspeisen (ortsgebundene Regel- und Systemaufgabe), bis die Netzfrequenz wieder auf dem gewünschten Wert liegt. Weitere Beispiele sind die Messung des Phasenwinkels im lokalen Netz um die entsprechende Blindleistungskompensation bereitzustellen oder die Spannungsmessung im Falle von zu viel oder zu wenig Lastabnahme im lokalen Netz zum Erhalt der Spannungsqualität. Für andere Regel- und Systemaufgaben sind entsprechende andere Reaktionsfolgen in der lokalen Steuereinheit hinterlegt.

In einer weiteren Ausführungsform ist die Energiespeicheranlage über eine oder mehrere Regeleinheit(en) an ein oder mehrere lokale Stromnetze und an das nicht-lokale Stromnetz angeschlossen, wobei die Regeleinheit(en) dazu ausgestaltet ist, einen Energiefluss zwischen den angeschlossenen Stromnetzen und der Energiespeicheranlage zu regeln. Wären die lokalen und nicht-lokalen Stromnetze lediglich mit dem Aufschaltpunkt der Energiespeicheranlage verbunden, so würde die von der Energiespeicheranlage eingespeiste Energie nur in das Stromnetz eingespeist werden, das den größeren Energiebedarf hat. Hiermit könnte aber nicht mehr gezielt lokal und nicht-lokal gemäß einer Aufgabenverteilung geregelt werden. Gegenwärtige Energiespeicher sind typischerweise über einen Schalter mit einem einzigen Stromnetz verbunden. Hier würde die vorstehende Steuerung des Energieflusses entfallen und der Schalter bräuchte lediglich bei einem Netzausfall geöffnet werden. In der vorliegenden Erfindung ist/sind die Regeleinheit(en) dagegen derart ausgestattet, dass nach Abtrennen des einen Stromnetzes die anderen angeschlossenen Stromnetze weiterhin wie gewünscht mit Energie versorgt werden können oder aus diesen Energie aufgenommen werden kann, da die Energiespeicheranlage im Rahmen der vorliegenden Erfindung simultan eine Mehrzahl an getrennten Stromnetzen versorgen muss. Die Regeleinheit steuert den Energiefluss zu den angeschlossenen Netzen in der von der Steuerung vorgesehenen Weise. In einer bevorzugten Ausführungsform ist die Regeleinheit außerdem dazu vorgesehen, ein oder mehrere der angeschlossenen Stromnetze im Bedarfsfall von der Energiespeicheranlage zu trennen. Sollte eines der angeschlossenen Stromnetze ausfallen, so trennt die Regeleinheit dieses Stromnetz unter Umständen sofort innerhalb weniger Millisekunden von der Energiespeicheranlage, damit diese weiterhin für die anderen Stromnetze betriebsbereit bleibt. Ansonsten würde ggf. ein Kurzschluss oder eine Überlastsituation eintreten. In einer weiteren Ausführungsform umfasst die Regeleinheit dazu eine Regelbox mit mindestens einem Regelglied und ein oder mehrere Trennschalter, die durch das Regelglied gesteuert werden und deren Anzahl von der Anzahl der an die Regeleinheit angeschlossenen Stromnetze abhängt. Die Regelbox ist dabei direkt oder über die Regeleinheit mit der Steuereinheit über eine Datenleitung verbunden, über die die Steuereinheit die Konfigurationsdaten der Regelfunktion an das Regelglied übertragen kann.

In einer weiteren Ausführungsform umfasst die Energiespeicheranlage einen Aufgabenspeicher zur Speicherung der empfangenen nicht-lokalen und ortsgebundenen Regel- und Systemaufgaben, auf den die Steuereinheit zur Steuerung des Energiespeichers gemäß der nicht-lokalen und ortsgebundenen Regel- oder Systemaufgaben zugreift. Der Aufgabenspeicher kann ein geeigneter Datenspeicher in der Energiespeicheranlage sein. Er kann dabei als Teil der Steuereinheit ausgeführt sein oder ein separater Speicher sein. In beiden Fällen ist die Steuereinheit so mit dem Aufgabenspeicher über eine Datenverbindung verbunden, dass sie auf den Aufgabenspeicher jederzeit zugreifen, die darin gespeicherten nicht ortsgebundenen und ortsgebundenen Regel- und Systemaufgaben auslesen und gemäß dieser die Energiespeicheranlage steuern kann. Der Fachmann kann im Rahmen der vorliegenden Erfindung den schaltungstechnischen Zugriff der Steuereinheit auf den Aufgabenspeicher und auf die anzusteuernden Energiespeichermodule der Energiespeicheranlage geeignet ausgestalten. Die Anweisungen zu den nicht ortsgebundenen und ortsgebundenen Regel- und Systemaufgaben können im Aufgabenspeicher beispielsweise als Vorschrift "Speicher aus dem nicht-lokalen Stromnetz xx kWh am y.Tag ab zz Uhr" gespeichert sein. In einem anderen Beispiel könnte die Anweisung im Aufgabenspeicher als "speise heute ab zz Uhr xx kW pro Stunde in das lokale Stromnetz ein". Das konkrete Datenformat der Anweisungen kann vom Fachmann im Rahmen der vorliegenden Erfindung geeignet gewählt werden. Diese Anweisungen (oder Aufgaben) im Aufgabenspeicher können beispielsweise eine Regelleistung oder eine Spannungs- oder Stromstabilisierung betreffen. Die Anweisungen (oder Aufgaben) können dabei mit oder ohne Zeitbezug abgespeichert werden. Eine Anweisung (oder Aufgabe) ohne Zeitbezug könnte beispielsweise "liefere in Abhängigkeit der Stromnetzfrequenzabweichung von 50 Hz entsprechend einer Vorgabekurve die entsprechende Regelleistung" lauten.

In einer Ausführungsform umfasst die Energiespeicheranlage eine Prüfeinheit, die zur Prüfung der empfangenen nicht ortsgebundenen und ortsgebundener Regel- und Systemaufgaben vor der Speicherung im Aufgabenspeicher auf Plausibilität und Herkunft vorgesehen ist und die Speicherung im Aufgabenspeicher nur bei einem positiven Prüfergebnis erfolgt. Damit wird verhindert, dass Unbefugte Zugriff auf den Anlagenkern, sprich die Steuereinheit, bekommen können. Dies trägt zur Betriebssicherheit der Energiespeicheranlage gegenüber der Außenwelt und zur Versorgungssicherheit bei. Die Herkunft kann beispielsweise bei den empfangenen nicht ortsgebundenen und ortsgebundenen Regel- und Systemaufgaben Teil des empfangenen Datenpakets sein und entsprechend von der Prüfeinheit ausgelesen und mit der erwarteten Datenstruktur der Herkunftsbezeichnung verglichen werden. Hierbei kann die Herkunft beispielsweise als Hash-Wert übermittelt und von der Prüfeinheit mit den in der Prüfeinheit vorliegenden Hash-Werten für die zugelassenen Datenquellen für nicht ortsgebundenen und ortsgebundene Regel- und Systemaufgaben verglichen werden. Bei Gleichheit des vorhandenen mit dem empfangenen Hash-Wert ist die zulässige Herkunft festgestellt. Die nicht-lokalen und lokalen Systemaufgaben könnten auch verschlüsselt übermittelt werden, wobei der Entschlüsselungs-Schlüssel für die jeweilige Herkunft charakteristisch ist. Können die nicht ortsgebundenen und ortsgebundenen Regel- und Systemaufgaben mit einem Entschlüsselungs-Schlüssel entschlüsselt werden, so ist dieser Entschlüsselungs-Schlüssel charakteristisch für die Herkunft der empfangenen Daten. Die Plausibilität der empfangenen Daten kann beispielsweise dadurch überprüft werden, dass die ortsgebundenen und nicht ortsgebundenen Regel- und Systemaufgaben keine Aufgaben darstellen, deren Erfüllung über die Anlagenspeicherkapazität und Anlagenleistung der Energiespeicheranlage hinausgehen würden oder die Aufgaben vom Datenformat her unsinnige Daten enthalten. Eine Plausibilitätsprüfung kann dabei beispielsweise eine Prüfsummenbildung, ein Datensummenprüfung und/oder eine Verschlüsselung mit anschließender erfolgreicher Entschlüsselung umfassen. In einer bevorzugten Ausführungsform ist die Prüfeinheit dazu ausgestaltet, bei einem negativen Prüfergebnis ein Alarmsignal an die Steuereinheit auszusenden und die Steuereinheit ist dazu ausgestaltet, in Folge des Alarmsignals die Energiespeicheranlage von den angeschlossenen Stromnetzen zu trennen. Somit wird bei einem unberechtigten Zugriffsversuch auf die Energiespeicheranlage in Form von Regel- und Systemaufgaben unbekannter Herkunft oder verdächtigem Inhalt die Energiespeicheranlage in einen sicheren Betriebszustand gebracht, indem sie durch Trennung vom Stromnetz stromlos geschaltet wird. In Reaktion auf das Alarmsignal und die erfolgte Netztrennung kann die Steuereinheit versuchen, über das Kommunikationsnetzwerk eine Verbindung aufzubauen, um neue nicht ortsgebundenen und/oder ortsgebundene Regel- und Systemaufgaben zu empfangen, deren Herkunft und Inhalt einwandfrei sind.

In einer weiteren Ausführungsform ist die Steuereinheit dazu ausgestaltet, Betriebsdaten der Energiespeicheranlage zu erfassen, auszuwerten und ein Meldeprotokoll, umfassend die Betriebsdaten über das Kommunikationsnetz, auszusenden, damit zumindest die Betriebsdaten für die zu empfangenden nicht ortsgebundenen Regel- und Systemaufgaben berücksichtigt werden können. Die Betriebdaten der lokalen Energiespeichereinheit geben beispielsweise an, welche Anlagenkapazität und Anlagenleistung vorliegt und welche (momentane) freie nicht-lokale Kapazität (die Kapazität, die nicht für die ortsgebundenen Regel- und Systemaufgaben benötigt wird) und (momentane) freie nicht-lokale Leistung (die Anlagenleistung, die nicht für die ortsgebundenen Regel- und Systemaufgaben benötigt wird) die lokale Energiespeicheranlage für nicht ortsgebundene Aufgaben hat und welche ortsgebundenen Regel- und Systemaufgaben in Zukunft geplant sind. Die Betriebsdaten können dabei von der Steuereinheit selber gemessen werden oder die Steuereinheit bekommt die Betriebsdaten von Betriebssensoren über entsprechende Datenleitungen übermittelt. Die auf diese Weise erfassten Betriebsdaten werden nach einem in der Steuereinheit abgelegten Schema von der Steuereinheit ausgewertet, beispielsweise durch ein entsprechendes Softwareprogramm, und als Betriebsdaten in einem vorher festgelegten Format über die vorstehend bereits beschriebenen Schnittstellen ausgesendet. Der Zeittakt für die Aussendungen beträgt beispielsweise 1 Hertz oder weniger. Die Steuereinheit erfasst beispielsweise die Ist-Werte der Energiemodul-Speicherzustände beziehungsweise der Speicherzustände der einzelnen Schwungradenergiespeicher, die Zustände der angeschlossenen Stromnetze (beispielsweise Spannung und Strom) und verrechnet diese Daten zur Ausführung der lokalen, nicht ortsgebundenen und gegebenenfalls regionalen Regel- und Systemaufgaben. Das Meldeprotokoll kann beispielsweise zusätzlich zu den Betriebsdaten die Identität der Energiespeicheranlage in Form einer charakteristischen Bezeichnung wie einer Kennnummer und möglicherweise den Ort, an dem die Energiespeicheranlage aufgestellt ist, in Form von Geokoordinaten umfassen. Das Meldeprotokoll hat dabei ein geeignetes Datenformat, um von den gewünschten externen Stellen empfangen und verarbeitet werden zu können. Die ausgesendeten Betriebsdaten inklusive der Information über Ist- und Plandaten von freien Anlagenspeicherkapazitäten und freien Anlagenleistungen können dann von einer externen Steuereinheit empfangen und entsprechend verplant werden und anschließend entsprechende anlagenspezifische nicht ortsgebundene Regel- und Systemaufgaben an die Energiespeicheranlage zurück übermittelt werden. In einem Energiespeichersystem mit einer Vielzahl an lokalen Energiespeicheranlagen mit einer Vielzahl an freien Kapazitäten, die für die einzelnen Energiespeicheranlagen je nach Gesamtkapazität der einzelnen Energiespeicheranlagen und deren Aufgaben für das lokale Stromnetz gegebenenfalls sehr unterschiedlich sein können, kann die externe Steuereinheit sehr flexibel und reaktionsschnell Kapazitäten für die Einspeisung in das nicht-lokale Stromnetz oder für die Energieabnahme aus dem nicht-lokalen Stromnetz über entsprechende Anweisungen (übermittelte nicht ortsgebundene Regel- und Systemaufgaben) an die Steuereinheiten der jeweiligen Energiespeicheranlagen für nicht-lokale Bedürfnisse bereitstellen. Hierbei kann die externe Steuereinheit sogar lokal unterschiedliche Aufgaben an die Steuereinheiten unterschiedlicher erfindungsgemäßer Energiespeicheranlagen vergeben. Beispielsweise kann die externe Steuereinheit zur Stützung des nicht-lokalen Stromnetzes nahe eines größeren Verbrauchers die Steuereinheiten der Energiespeicheranlagen, die ebenfalls in der Nähe dieses Verbrauchs angeordnet sind und deren Positionen der externen Steuereinheit bekannt sind, zur Einspeisung (Abgabe) von Energie in das nicht-lokale Stromnetz über entsprechend übermittelte Regel- und Systemaufgaben veranlassen. Im gleichen nicht-lokalen Stromnetz (oder einem weiteren nicht-lokalen Stromnetz) kann die externe Steuerreinheit den Steuerreinheiten anderer Energiespeicheranlagen, die geographisch weit entfernt von den vorstehend beschriebenen Energiespeicheranlagen stehen, Regel- und Systemaufgaben zur Abnahme von Energie aus dem nicht-lokalen Stromnetz übermitteln. Somit kann die externe Steuereinheit bei einer Vielzahl an geographisch an unterschiedlichen Positionen angeordneten Energiespeicheranlagen flexibel und den regionalen Gegebenheiten angepasst entsprechende nicht ortsgebundene Regel- und Systemaufgaben per entsprechender individuell ausgerichteter Übermittlung an die jeweiligen Steuereinheiten zuteilen.

In einer weiteren Ausführungsform ist die Steuereinheit dazu ausgestaltet, den ortsgebundenen Regel- und Systemaufgaben zur Steuerung der jeweiligen Energiespeicheranlage Vorrang vor den nicht ortsgebundenen Regel- und Systemaufgaben im nicht-lokalen Stromnetz zu geben. Bei einer einzigen Energiespeicheranlage ist die freie Kapazität entweder ausreichend, um die nicht ortsgebundenen Regel- und Systemaufgaben im Normalfall zu erfüllen oder die zusätzliche Kapazität, die für ortsgebundenen Regel- und Speicheraufgaben reserviert ist, würde als mögliche Reserve im Ausnahmefall zur Lösung des Netzproblem nicht ausreichen. Insofern basiert der Vorrang der ortsgebundenen Regel- und Systemaufgaben auf den begrenzten Anlagenspeicherkapazitäten und Anlagenleistungen. Sind dagegen mehreren Energiespeicheranlagen an das nicht-lokale Stromnetz angeschlossen, könnte der Regelbedarf im nicht-lokalen Stromnetz auch von anderen Energiespeicheranlagen gedeckt werden, da damit auf eine ausreichende freie Anlagenspeicherkapazität und Anlagenleistung zurückgegriffen werden kann, ohne dass dafür die ortsgebundenen Regel- und Systemaufgaben vernachlässigt oder gar missachtet werden müssten Beispielsweise 20 lokale Anlagen ä 1,6 MWh im Systemverbund entsprechen 32 MWh. Lokal reserviert sind z.B. jeweils 1MWh. Dies ergibt eine verfügbare Kapazität für nicht ortsgebundene Aufgaben von 12 MWh. Dabei wären gleichzeitige Anforderungen an die Bereitstellung von weiterer Leistung zusätzlich zu betrachten und ggf. zu berücksichtigen.

In einer Ausführungsform umfasst die Energiespeicheranlage ein oder mehrere Wettersensoren zur Messung lokaler Wetterbedingungen und die Steuereinheit ist dazu vorgesehen, Betriebskomponenten der Energiespeicheranlage in Abhängigkeit von den Wetterbedingungen zu steuern. Betriebskomponenten sind dabei beispielsweise Nebenaggregate wie Kühlaggregate, Vakuumanlagen etc. Solche Betriebskomponenten werden durch Witterungseinflüsse beeinflusst. Beispielsweise muss ein Kühlaggregat bei hohen Außentemperaturen stärker betrieben werden als bei niedrigen Außentemperaturen. Sofern die Energiespeichermodule selber die Energie zum Betreiben der Betriebskomponenten bereitstellen, muss das bei der Planung der Ausführung zukünftiger nicht ortsgebundener und ortsgebundener Regel- und Systemaufgaben berücksichtigt werden. Eine höhere Außentemperatur würde die verfügbare Anlagenspeicherkapazität und Anlagenleistung für Aufgaben in den angeschlossenen Stromnetzen verändern. Insofern ermöglicht eine Messung der Wetterdaten eine besser vorausplanende und damit effektivere Verwendung der Energiespeicheranlage.

In einer weiteren Ausführungsform ist die Energiespeicheranlage dazu vorgesehen, einen Regelverbund mit anderen Energiespeicheranlagen zu bilden, die als Regelverbund für eine gemeinsame Steuerung gemäß der nicht ortsgebundenen Regel- oder Systemaufgaben im nicht-lokalen Stromnetz oder gemäß regionaler Regel- und Systemaufgaben vorgesehen sind und dass die Energiespeicheranlage zur Kommunikation mit den anderen Energiespeicheranlagen zur Durchführung der gemeinsamen Steuerung ausgestattet ist. Als Regelverbund wird hier der Zusammenschluss mehrerer Energiespeicheranlagen für die gemeinsame Reaktion auf Bedürfnisse im nicht-lokalen Stromnetz verstanden. Über die Schnittstellen erhalten die Energiespeicheranlagen des Regelverbunds aktuelle Bedarfsmeldungen, so dass der Aufgabenspeicher in den Steuereinheiten immer auf den aktuellen Stand gebracht werden kann und die Steuereinheiten jederzeit aktuell auf die Bedürfnisse im nicht-lokalen als auch in den lokalen Stromnetzen mit Abgabe oder Aufnahme von Energie aus den lokalen Energiespeichern reagieren können. In einer bevorzugten Ausführungsform ist der Regelverbund dazu vorgesehen, eine Schwarzstartunterstützung für das nicht-lokale Stromnetz bereitzustellen, wobei die Schwarzstartunterstützung Vorrang vor den ortsgebundenen Regel- und Systemaufgaben für das oder die jeweilig angeschlossenen lokalen Stromnetze hat. Als Schwarzstart wird allgemein das Anfahren eines Energielieferanten, beispielsweise ein Kraftwerk oder ein Energiespeicher, nach einem Netzausfall bezeichnet, wenn dies unabhängig vom Stromnetz geschieht. Unter Schwarzstartfähigkeit versteht man die Fähigkeit eines solchen Energielieferanten, unabhängig vom Stromnetz vom abgeschalteten Zustand ausgehend hochzufahren beziehungsweise Energie aus einem Energiespeicher abzugeben. Dies ist insbesondere bei einem flächendeckenden Ausfall des nicht-lokalen Stromnetzes von Bedeutung, um das nicht-lokale Stromnetz wieder in Betrieb zu nehmen. Die Energie schwarzstartfähiger Kraftwerke oder Energiespeicheranlagen kann dann zum Anfahren nicht-schwarzstartfähiger Kraftwerke oder Energiespeicheranlagen verwendet werden. Beispielsweise benötigen Wärmekraftwerke ein hohes Maß an elektrischer Energie, bevor sie selber elektrische oder thermische Leistung bereitstellen können. Stellt man einem Kohle- oder Kernkraftwerksblock eine oder mehrere erfindungsgemäße schwarzstartfähige lokale Energiespeicheranlagen mit ausreichender Leistung zur Seite, so kann für das Gesamtsystem aus Kraftwerk und Energiespeicheranlage Schwarzstartfähigkeit erreicht werden.

In einer weiteren Ausführungsform ist die Energiespeicheranlage dazu vorgesehen, anhand von lokalen oder regionalen Einflussdaten mit anderen Energiespeicheranlagen einen Regelverbund zu bilden und ihm zusätzliche oder veränderte vorrangige ortsgebundene Regel- und Systemaufgaben als regionale Regel- und Systemaufgaben zu übermitteln. Lokale oder regionale Einflussdaten bezeichnen beispielsweise Umweltdaten, die Einfluss auf die in ein Stromnetz einzuspeisende Energie haben, wie Windstärke, Sonnenintensität und Sonnenscheindauer oder Temperatur. Weitere Einflussdaten können lokale Einspeisedaten von erneuerbaren Energieanlagen sein. Anhand solcher Einflussdaten können die Energiemengen, die beispielsweise in Energieanlagen zur Nutzung regenerativer Energien wie in Windkraft oder Solarkraftwerk erzeugt werden, auch kurzfristig abgeschätzt werden. Verändern sich die lokalen Umweltdaten (Einflussdaten) gegenüber einer früheren Vorhersage, so kann beispielsweise wesentlich mehr oder wesentlich weniger Energie von solchen Energieanlagen tatsächlich in das lokale oder nicht-lokale Stromnetz eingespeist werden. Entsprechend können erfindungsgemäße regionale Verbunde die eventuell überschüssige Menge an Energie speichern und zu einem späteren Zeitpunkt an das lokale oder nicht-lokale Stromnetz abgeben. Wird ein lokales Stromnetz beispielsweise aus solchen Energieanlagen wie Windkraft oder Solarkraft gespeist und steht absehbar aus den Einflussdaten aus diesen Energieanlagen weniger Energie als geplant zur Verfügung, können die jeweiligen an das lokale Stromnetz angeschlossenen Energiespeicheranlagen die fehlende Energie dem lokalen Stromnetz zur Verfügung stellen. Als Regelverbund wird also auch der Zusammenschluss mehrerer Energiespeicheranlagen für die gemeinsame Reaktion auf Bedürfnisse in einem oder mehreren lokalen Stromnetzen verstanden. Hierbei können durchaus auch Energien für bestimmte ortsgebundene Regel- und Systemaufgaben über das nicht-lokale Stromnetz zu einer geographisch an einer anderen Position angeordneten Energiespeicheranlagen dieses Regelverbunds verschoben werden. Benötigt beispielsweise eine Energiespeicheranlage für ihr angeschlossenes lokales Stromnetz eine Energieeinspeisung aus deren Energiespeichermodulen in dieses lokale Stromnetz und hat diese Energiespeicheranlage dafür nicht die notwendige Energiemenge in ihren Speichermodulen gespeichert, so kann sie diese Energie auch von einer anderen an einem anderen Ort angeordneten Energiespeicheranlage zur Verfügung gestellt bekommen, ohne dass dafür diese andere Energiespeicheranlage an dasselbe lokale Stromnetz wie die Energiespeicheranlage mit zu geringer verfügbarer Energie angeschlossen sein muss. Die erfindungsgemäßen Energiespeicheranlagen eines Regelverbunds sind alle über das nicht-lokale Stromnetz miteinander verbunden. Nur bei Ausfall des nicht-lokalen Stromnetzes wäre dies nicht mehr der Fall. In diesem Fall stellen alle von diesem Ausfall betroffenen Energiespeicheranlagen wieder die ursprünglichen autarken Energiespeicheranlagen zur Versorgung der lokalen Stromnetze dar. Dieser Energieübertrag von einer erfindungsgemäßen Energiespeicheranlage zu einer anderen erfindungsgemäßen Energiespeicheranlage kann insbesondere dann wünschenswert sein, wenn die abgebende Energiespeicheranlage für die baldige Aufnahme von Energie aus einem lokalen Stromnetz, beispielsweise für einen Windenergiepark oder ein Solarkraftwerk, im Rahmen derer ortsgebundenen Regel- und Systemaufgaben vorgesehen ist.

In einer weiteren Ausführungsform ist die Energiespeicheranlage zur Führung des Regelverbunds infolge einer über das Kommunikationsnetzwerk empfangenen nicht-lokalen Anweisung vorgesehen. Die empfangene nicht-lokale Anweisung wird beispielsweise im Aufgabenspeicher der zur Führung bestimmten Energiespeicheranlage abgespeichert und von der betreffenden Steuereinheit als führende Steuereinheit an die weiteren Steuereinheiten der anderen Energiespeicheranlagen im Regelverbund über das Kommunikationsnetz weitergeleitet. Dadurch ist die Gesamtsteueraufgabe definiert, so dass alle beteiligten Energiespeicheranlagen in einem für die Regel- und Systemaufgaben definierten Verhältnis zueinander stehen und somit effektiv im Regelverbund arbeiten können. In einer bevorzugten Ausführungsform ist die Energiespeicheranlage ferner dazu vorgesehen, im Fall einer über das Kommunikationsnetzwerk übermittelten Hierarchie für die Führung des Regelverbunds bei Ausfall der mit der Steuerung beauftragten Energiespeicheranlage die Steuerung des Regelverbunds gemäß der Hierarchie zu übernehmen. Somit besitzt der Verbund auch bei Ausfall der führenden Steuereinheit eine definierte Aufgabenverteilung und die entsprechend nächste Steuereinheit übernimmt die Führung im Verbund. Diese Hierarchie wird beispielsweise ebenfalls in den Aufgabenspeichern der Steuereinheiten der Energiespeicheranlagen des Regelverbunds gespeichert.

Die Erfindung betrifft des Weiteren ein Verfahren mit dem Merkmalen des Anspruchs 13.

Die Energiespeicheranlage ist hier in einer Ausführungsform an ein nicht-lokales Stromnetz und an ein oder mehrere lokale Stromnetze angeschlossen. Hier werden die ortsgebundenen und nicht ortsgebundenen Regel- und Systemaufgaben in den jeweiligen angeschlossenen Stromnetzen separat ausgeführt. In einer anderen Ausführungsform ist die Energiespeicheranlage lediglich an ein oder mehrere lokale Stromnetze angeschlossen, von denen zumindest ein lokales Stromnetz mit dem nicht lokalen Stromnetz verbunden ist. In diesem Fall werden die ortsgebundenen Regel- und Systemaufgaben in den jeweiligen lokalen Stromnetzen ausgeführt und die nicht ortsgebundenen Regel- und Systemaufgaben werden über das angeschlossene lokale Stromnetz, das mit dem nicht-lokalen Stromnetz verbunden ist, in dem nicht-lokalen Stromnetz ausgeführt. In gewissen Betriebszuständen, beispielsweise bei Ausfall eines oder mehrerer Stromnetze kann eine Energiespeicheranlage auch vom nicht-lokalen Stromnetz völlig getrennt sein. Diese Trennung kann beispielsweise zeitlich beschränkt vorliegen. Dasselbe kann auch gegenüber dem oder den lokalen Stromnetzen vorkommen.

Der Begriff "Empfangen" bezeichnet alle Arten von Vorgängen, bei denen Daten zur Energiespeicheranlagen hin übertragen werden. Diese Übertragung kann über das Kommunikationsnetzwerk erfolgen: Die Daten können aber auch von einem Datenträger per Auslesen in einem entsprechenden Datenträgerlaufwerk (beispielsweise einer CD-ROM) oder über eine Datenträgerschnittstelle (beispielsweise von einem USB-Datenstick) empfangen werden. Alternativ können die Daten auch per Direkteingabe über eine entsprechende Benutzerschnittstelle empfangen werden. Zu empfangende Daten sind beispielsweise die ortsgebundenen und/oder nicht ortsgebundenen Regel- und Systemaufgaben. Die für die ortsgebundenen Regel- und Systemaufgaben benötigten und nicht benötigten Anlagenspeicherkapazitäten und/oder Anlagenleistungen können dabei im Rahmen der Betriebsdaten an eine zentrale Steuereinheit übermittelt werden. In einer Ausführungsform erfolgt das Steuern der Energiespeicheranlage mittels der über die Schnittstelle empfangenen und ein einem Aufgabenspeicher gespeicherten nicht ortsgebundenen Regel- und Systemaufgaben, die von den jeweiligen Steuereinheit ausgelesen und nach Möglichkeit ausgeführt werden. Die empfangenen Daten können über das Kommunikationsnetzwerk oder auf andere Weise übertragen werden.

Gemäß der Erfindung umfasst das Verfahren die weiteren Schritte:
- Messung ein oder mehrerer relevanter Daten im jeweiligen an die Energiespeicheranlage angeschlossenen Stromnetz durch eine oder mehrere Messeinheit(en) der Energiespeicheranlage, und
- Steuerung der Energiespeicheranlage für die ortsgebundenen Regel- und Systemaufgaben in diesem lokalen Stromnetz durch die Steuereinheit auf Basis der gemessenen relevanten Daten.

In einer weiteren Ausführungsform umfasst das Verfahren die weiteren Schritte:
- Prüfen der empfangenen nicht ortsgebundenen und ortsgebundenen Regel- und Systemaufgaben mittels einer Prüfeinheit auf Plausibilität und Herkunft,
- Speicherung der empfangenen nicht ortsgebundenen und ortsgebundenen Regel- und Systemaufgaben in einem Aufgabenspeicher der Energiespeicheranlage bei einem positiven Prüfergebnis,
- Zugreifen der Steuereinheit auf die im Aufgabenspeicher gespeicherten nicht ortsgebundenen und ortsgebundenen Regel- und Systemaufgaben zur Steuerung der Energiespeicheranlage,
- vorrangiges Steuern der Energiespeicheranlage für ortsgebundene Regel- und Systemaufgaben durch die Steuereinheit gemäß der im Aufgabenspeicher gespeicherten nicht ortsgebundenen und ortsgebundenen Regel- und Systemaufgaben und
- Aussenden eines Alarmsignals durch die Prüfeinheit an die Steuereinheit bei einem negativen Prüfergebnis, woraufhin die Steuereinheit eine Trennung der Energiespeicheranlage von den angeschlossenen Stromnetzen veranlasst.

In einer weiteren Ausführungsform umfasst das Verfahren die weiteren Schritte:
- periodisches Aussenden eines Testsignals durch die Energiespeicheranlage über das Kommunikationsnetzwerk,
- Empfangen eines entsprechenden Rücksignals, wobei das Empfangen des Rücksignals die bestehende Verbindung zum Kommunikationsnetzwerk belegt,
- ausschließliche Durchführung der ortsgebundenen Regel- und Systemaufgaben für das oder die jeweiligen lokalen Stromnetze durch die Energiespeicheranlage bei einer nicht vorhandenen Verbindung zum Kommunikationsnetzwerk.

Vorzugsweise ist die Energiespeicheranlage dazu ausgestaltet, im Falle einer unterbrochenen Verbindung die Verbindung über ein im Kommunikationsnetzwerk vorhandenes alternatives Sub-Kommunikationsnetz wieder herzustellen. Dazu umfasst die Energiespeicheranlage mehrere Schnittstellen zu Sub-Kommunikationsnetzen im Kommunikationsnetzwerk. Im Normalbetrieb mit Kommunikationsverbindung werden also alle angeschlossenen Stromnetze bei der Regelung berücksichtigt. Der Begriff "Normalbetrieb" bezeichnet hier den Betrieb der Energiespeicheranlage bei vorhandenem nicht-lokalem Stromnetz, das weitgehend ungestört ist.

In einer weiteren Ausführungsform umfasst das Verfahren den weiteren Schritt:
- Bilden eines Regelverbunds durch die Energiespeicheranlage mit anderen Energiespeicheranlagen, der für eine gemeinsame Steuerung gemäß der nicht ortsgebundenen Regel- oder Systemaufgaben im nicht-lokalen Stromnetz oder gemäß regionaler Regel- und Systemaufgaben vorgesehen ist, wobei die Energiespeicheranlage zur Kommunikation mit den anderen Energiespeicheranlagen zur Durchführung der gemeinsamen Steuerung ausgestattet ist.

Die Bildung eines Regelverbunds kann beispielsweise aufgrund ihrer jeweiligen Betriebsdaten und des vorliegenden Bedarfs im nicht-lokalen Stromnetz erfolgen. Manche Energiespeicheranlagen können dabei aufgrund ihrer momentanen oder generellen Betriebsdaten für einen Regelverbund ausfallen, beispielsweise aufgrund zu geringer Kapazität oder nicht vorhandener Schwarzstartfähigkeit. Vorrangige nicht ortsgebundene Regel- und Systemaufgaben sind beispielsweise die Bereitstellung größerer Mengen an Energie für das nicht-lokale Stromnetz in einer begrenzten Region im nicht-lokalen Stromnetz aufgrund eines sich an das nicht-lokale Stromnetz anschaltenden großen Verbrauchers. Ein anderes Beispiel für vorrangige nicht ortsgebundene Regel- und Systemaufgaben wäre ein Regelverbund für eine Schwarzstartunterstützung.

Die Verwendung einzelner Energiespeicheranlagen für einen Regelverbund kann beispielsweise auch aufgrund ihrer jeweiligen Betriebsdaten und des vorliegenden Bedarfs in einem oder mehreren lokalen Stromnetzen erfolgen. Manche Energiespeicheranlagen können dabei aufgrund ihrer momentanen oder generellen Betriebsdaten für einen Regelverbund ausfallen, beispielsweise aufgrund zu geringer Kapazität oder nicht günstiger geographischen Position (zu hohe Übertragungsverluste). Die zusätzlichen oder veränderten vorrangigen Regel- und Systemaufgaben können dabei in den Arbeitsspeicher so gespeichert werden, dass diese Aufgaben an die vorher abgespeicherten Aufgaben angehängt und entsprechend mit bedingtem oder unbedingtem Vorrang indiziert werden, beispielsweise durch Setzen einer entsprechenden Markierung in den Datensätzen. Hierbei bleibt die Aufgabenhistorie für Protokollzwecke weiterhin erhalten. Alternativ können auch unterrangige Aufgaben übersprungen werden, da ihre Anwendbarkeit mit dem Vorrang anderer Aufgaben entfällt.

Die Erfindung ist durch die Merkmale der unabhängigen Ansprüche 1 und 13 definiert, wobei weitere mögliche Ausführungsformen in den abhängigen Ansprüchen definiert sind.

### Kurze Beschreibung der Abbildungen

Diese und andere Aspekte der Erfindung werden im Detail in den Abbildungen wie folgt gezeigt.
- Fig.1:: ein Ausführungsbeispiel für eine erfindungsgemäße Energiespeicheranlage;
- Fig.2:: ein Ausführungsbeispiel eines Verfahrens zum Betreiben der erfindungsgemäßen Energiespeicheranlage;
- Fig.3:: ein Ausführungsbeispiel für das erfindungsgemäße Verfahren im Falle einer gestörten Kommunikation zum Kommunikationsnetzwerk;
- Fig.4:: ein Ausführungsbeispiel für eine Reaktion der Energiespeicheranlage auf empfangene Regel- und Systemaufgaben mit zweifelhafter Herkunft und/oder Inhalt;
- Fig.5:: ein Ausführungsbeispiel eines Regelverbunds aus mehreren erfindungsgemäßen Energiespeicheranlagen;
- Fig.6:: ein Ausführungsbeispiel für das erfindungsgemäße Verfahren im Falle eines Ausfalls des nicht-lokalen Stromnetzes;
- Fig.7:: ein Ausführungsbeispiel der Regeleinheit mit einer Regelbox

### Detaillierte Beschreibung der Ausführungsbeispiele

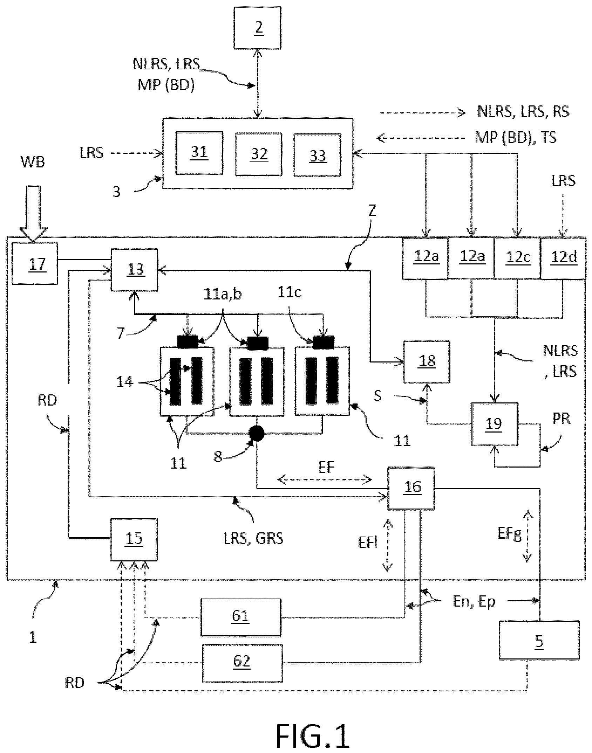

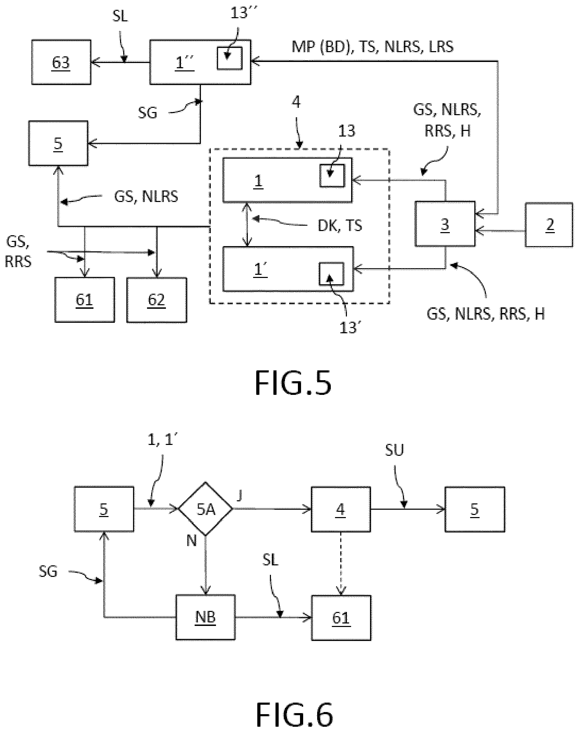

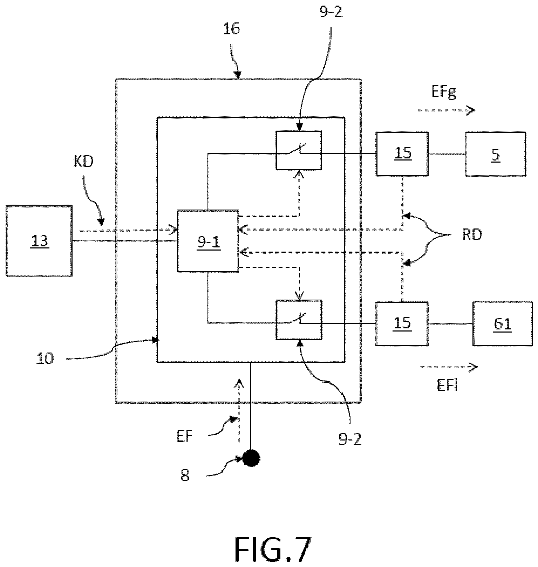

Fig. 1 zeigt ein Ausführungsbeispiel für die erfindungsgemäße Energiespeicheranlage 1. Die Energiespeicheranlage 1 hat in dieser Ausführungsform drei Energiespeichermodule 11 mit jeweils zwei Schwungradenergiespeichern 14 zur reversiblen Speicherung von Energie pro Energiespeichermodul 11. Das hier gezeigte Ausführungsbeispiel ist nur exemplarisch zu verstehen. Die Anzahl der Energiespeichermodule 11 pro Energiespeicheranlage 1 hängt von der jeweiligen gewünschten Anwendung ab und kann daher stark variieren. Es können auch Energiespeicheranlagen 1 mit nur einem einzigen Energiespeichermodul 11 verwendet werden. Die Energiespeichermodule 11 sind hier über einen gemeinsamen Aufschaltpunkt 8 verbunden, so dass deren Modulkapazitäten und Modulleistungen in Summe als Anlagenspeicherkapazität SK und Anlagenleistung L der Energiespeicheranlage 1 für Regel- und Systemaufgaben NLRS, LRS zur Verfügung steht. In Energiespeicheranlagen 1 mit nur einem einzigen Energiespeichermodul 11 kann der Aufschaltpunkt 8 auch entfallen. Ebenfalls kann die Anzahl der Schwungradenergiespeicher 14 in einem Energiespeichermodul 11 von Energiespeichermodul 11 zu Energiespeichermodul 11 und von Energiespeicheranlage 1 zu Energiespeicheranlage 1 variieren. Vorteilhaft ist eine hohe Anzahl an Schwungradenergiespeichern 14 pro Energiespeichermodul 11, damit die Anlagenspeicherkapazität SK und Anlagenleistung L der Energiespeicheranlage 1 vergrößert wird. Die Anlagenspeicherkapazität SK und die Anlagenleistung L wird zur Aufnahme En und Abgabe Ep von Energie an ein oder mehrere an die Energiespeicheranlage 1 angeschlossenen Stromnetze 5, 61, 62 verwendet. Dabei ist die hier gezeigte Energiespeicheranlage 1 an ein nicht-lokales Stromnetz 5 zur Ausführung empfangener nicht ortsgebundener Regel- und Systemaufgaben NLRS im nicht-lokalen Stromnetz 5 und an zwei lokale Stromnetze 61, 62 zur Ausführung empfangener ortsgebundener Regel- und Systemaufgaben LRS in den jeweiligen lokalen Stromnetzen 61, 62 angeschlossen. Die Energiespeicheranlage 1 umfasst hier außerdem drei Schnittstellen 12a, 12b, 12c, über die sie mit einem Kommunikationsnetzwerk 3 verbunden ist. Das Kommunikationsnetzwerk 3 umfasst in dieser Ausführungsform drei Sub-Kommunikationsnetze 31, 32, 33, beispielsweise ausgeführt als kabel-, funk- und stromgebundene Sub-Kommunikationsnetze 31, 32, 33. Entsprechend sind die drei Schnittstellen 12a, 12b, 12c jeweils zum Aufbau einer Verbindung zu jeweils einem Sub-Kommunikationsnetz 31, 32, 33 im Kommunikationsnetzwerk 3 zuständig. Die Energiespeicheranlage umfasst des Weiteren eine vierte Schnittstelle, über die Daten auf anderen Datenträgern oder Datenkanälen empfangen werden können, beispielsweise ortsgebundene Regel- und Systemaufgaben gespeichert auf einer CD-ROM oder einem USB-Speicher. Über das Kommunikationsnetzwerk 3 werden zumindest die nicht ortsgebundenen Regel- und Systemaufgaben NLRS zur Energiespeicheranlage 1 übertragen und von dieser empfangen EG. In anderen Ausführungsformen können auch die ortsgebundenen Regel- und Systemaufgaben LRS über das Kommunikationsnetzwerk 3 von der Energiespeicheranlage 1 empfangen EL werden. Die Steuereinheit 13 der Energiespeicheranlage 1 steuert SL, SG die Aufnahme En und Abgabe Ep von Energie aus oder in die angeschlossenen Stromnetze 5, 61, 62 gemäß der ortsgebundenen und nicht ortsgebundenen Regel- und Systemaufgaben LRS, NLRS simultan für die angeschlossenen Stromnetze 5, 61, 62. Hierbei werden die nicht ortsgebundenen Regel- und Systemaufgaben NLRS von der Steuereinheit 13 nur im Rahmen der Anteile SKg, Lg der Anlagenspeicherkapazitäten SK und/oder Anlagenleistung L ausgeführt, die nicht für die ortsgebundenen Regel- und Systemaufgaben LRS benötigt werden. Die einzelnen Energiespeichermodule 11 umfassen in dieser Ausführungsform jeweils Modulsteuereinheiten 11a, 11b, 11c zum Betrieb der einzelnen Energiespeichermodule 11 und deren interne Steuerung. Die Energiespeichermodule 11 werden hier gemeinsam von der lokalen Steuereinheit 13 gesteuert, wobei die Steuereinheit 13 jeweils über entsprechende Datenverbindungen 7 die einzelnen Modulsteuereinheiten zur Ausführung der Regel- und Systemaufgaben anweist und die Modulsteuereinheiten die Anweisungen in entsprechende Maschinenparameter für die Schwungradenergiespeicher 14 umsetzen. Alternativ könnte auf die Modulsteuereinheiten 11a, 11b, 11c verzichtet werden und alle deren Funktionen ebenfalls von der Steuereinheit 13 ausgeführt werden. Die Steuerung besteht darin, dass die lokale Steuereinheit 13 den einzelnen Energiespeichermodulen 11 vorschreibt, wie viel Energie aus dem Schwungsradenergiespeichern 14 mittels Abbremsung abgegeben oder in die einzelnen Schwungsradenergiespeichern 14 mittels Beschleunigung aufgenommen werden soll. Damit diese Energieaufnahme oder Abgabe wie gewünscht durchgeführt werden kann, steuern daraufhin die Modulsteuereinheiten 11a, 11b, 11c die Antriebsmotoren der Schwungradenergiespeicher 14 zur Abbremsung oder Beschleunigung der einzelnen Schwungradenergiespeicher 14. Die Energiespeichermodule 11 sind über einen gemeinsamen Aufschaltpunkt 8 in dieser Ausführungsform mit einer Regeleinheit 16 der Energiespeicheranlage 1 verbunden. Diese Regeleinheit 16 verbindet die beiden lokalen Stromnetze 61, 62 und das nicht-lokale Stromnetz 5 mit der Energiespeicheranlage 1, wobei die Regeleinheit 16 den Energiefluss EF von dem Aufschaltpunkt 8 in jeweilige separate Energieflüsse EFg, EFI zu den mit separaten Anschlüssen an die Regeleinheit 19 angeschlossenen Stromnetzen 5, 61, 62 aufteilt. Außerdem ist die Regeleinheit 16 dazu vorgesehen, ein oder mehrere der angeschlossenen Stromnetze 5, 61, 62 im Bedarfsfall von der Energiespeicheranlage 1 zu trennen, beispielsweise in Reaktion auf ein entsprechendes Trennungssignal von der Steuereinheit 13. Ein mögliches Ausführungsbeispiel für die Regeleinheit 16 ist in Fig.7 im Detail gezeigt. Bei einer Energiespeicheranlage 1, die lediglich an ein mit dem nicht-lokalen Stromnetz 5 verbundenes lokales Stromnetz angeschlossen ist, umfasst die Regeleinheit zumindest einen Trennschalter. Hier ist eine Aufspaltung der Energieflüsse EFI und EFg nicht notwendig, da der gesamte Energiefluss EF in das lokale Stromnetz mündet. Die Energiespeicheranlage 1 umfasst des Weiteren ein oder mehrere Messeinheiten zur Messung ein oder mehrerer relevanter Daten RD (gestrichelte Pfeile) im jeweiligen angeschlossenen lokalen und nicht-lokalen Stromnetz 5, 61, 62. Die Steuereinheit 11 ist dabei dazu vorgesehen, die Steuerung SL der Energiespeicheranlage 1 für die ortsgebundenen Regel- und Systemaufgaben LRS in diesem lokalen Stromnetz 61, 62 auf Basis der gemessenen relevanten Daten RD auszuführen. Gleiches gilt für das nicht-lokale Stromnetz 5. Aufgrund der so gemessenen und in der Energiespeichereinheit 1 damit verfügbaren relevanten Daten RD kann die Steuereinheit 13 nach Auswertung der relevanten Daten RD und dem Vergleich mit den vorgesehenen ortsgebundenen und nicht ortsgebundenen Regel- und Systemaufgaben LRS, NLRS die Steuerung der lokalen Energiespeicheranlage 1 für die ortsgebundenen und nicht ortsgebundenen Regel- und Systemaufgaben LRS, NLRS in diesen lokalen und nicht-lokalen Stromnetzen 5, 61, 62 zielgerichtet und flexibel zur Steuerung der Netzqualität ausführen. Zur Ausführung der Regel- und Systemaufgaben umfasst die Energiespeicheranlage 1 des Weiteren einen Aufgabenspeicher 18, der die empfangenen nicht ortsgebundenen und ortsgebundenen Regel- und Systemaufgaben NLRS, LRS speichert S und auf den die Steuereinheit 13 zur Steuerung der Energiespeicheranlage 1 gemäß der nicht ortsgebundenen und ortsgebundenen Regel- oder Systemaufgaben NLRS, LRS zugreift Z. Bevor allerdings die empfangenen ortsgebundenen und nicht ortsgebundenen Regel- und Systemaufgaben LRS, NLRS im Aufgabenspeicher 18 gespeichert S werden, führt eine Prüfeinheit 19 die zur Prüfung PR der empfangenen nicht ortsgebundenen und ortsgebundener Regel- und Systemaufgaben NLRS, LRS auf Plausibilität und Herkunft durch. Ist die Herkunft verifiziert und stellen die empfangenen Regel- und Systemaufgaben sinnvolle Aufgaben dar und/oder sind von der Energiespeicheranlage 1 bezüglich Anlagenspeicherkapazität und Anlagenleistung L erfüllbar, so sendet die Prüfeinheit 19 ein positives PP Prüfergebnis PE an den Aufgabenspeicher 18 aus, so dass dieser die empfangenen und geprüften ortsgebundenen und nicht ortsgebundenen Regel- und Systemaufgaben LRS, NLRS abspeichert S. Die Steuereinheit 13 kann dabei in periodischen Abständen, beispielsweise im Bereich von Millisekunden, oder nach jeder erfolgten Speicherung S auf den Aufgabenspeicher 18 zur Erfassung eventuell neuer ortsgebundener und/oder nicht ortsgebundener Regel- und Systemaufgaben zugreifen Z. Bei einem negativen NP Prüfergebnis PE sendet die Prüfeinheit 19 ein Alarmsignal AS an die Steuereinheit 13 aus, woraufhin die Steuereinheit 13 die Energiespeicheranlage 1 über entsprechende Anweisung an die Regeleinheit 16 von den angeschlossenen Stromnetzen 5, 61, 62 trennt TR. Hierbei kann das Alarmsignal entweder direkt oder über eine Datenverbindung durch den Aufgabenspeicher 18 hindurch an die Steuereinheit 13 gesendet werden. Die Aussendung durch den Aufgabenspeicher 18 hindurch hat den Vorteil, dass der Aufgabenspeicher 18 ohne zusätzliches Signal durch die Prüfeinheit 19 Kenntnis vom negativen NP Prüfergebnis PE erhält und in Reaktion darauf die Speicherung der negativ geprüften ortsgebundenen oder nicht ortsgebundenen Regel- und Systemaufgaben LRS, NLRS aktiv verweigert. In dieser Ausführungsform prüft die Steuereinheit 13 des Weiteren die bestehende Verbindung zum Kommunikationsnetzwerk 3 mittels eines periodisch ausgesandten Testsignals TS, auf dessen Empfang hin ein entsprechendes Rücksignal RS über das Kommunikationsnetzwerk 3 zu empfangen ist. Das Empfangen des Rücksignals RS belegt die bestehende Verbindung zum Kommunikationsnetzwerk 3. Testsignal TS und Rücksignal RS werden auch als so genannter digitaler Handschlag bezeichnet, bei dem die eine Seite ein Datenpaket absendet, das nach Empfang auf der anderen Seite entsprechend charakteristisch beantwortet wird. Nach Erhalt der Antwort ist für die absendende Seite das Bestehen der Kommunikationsverbindung positiv überprüft. Alternativ kann der digitale Handschlag auch von einem externen System initiiert und durch die Energiespeicheranlage 1 mit einem entsprechenden Rücksignal RS beantwortet werden. Die Steuereinheit 13 kann dabei dazu ausgestaltet sein, im Falle einer unterbrochenen Verbindung entlang eines der Sub-Kommunikationsnetze 31, 32, 33 diese Verbindung über ein im Kommunikationsnetzwerk 3 vorhandenes alternatives Sub-Kommunikationsnetz 31, 32, 33 wieder herzustellen. Bei bestehenden Verbindung über das Kommunikationsnetzwerk 3 ist die Steuereinheit 13 dazu ausgestaltet, die vorher von ihr erfassten und ausgewerteten Betriebsdaten BD der Energiespeicheranlage 1 in einem Meldeprotokoll MP, umfassend diese Betriebsdaten BD, über das Kommunikationsnetz 3 auszusenden, damit die Betriebsdaten BD zumindest für die zu empfangenden nicht ortsgebundenen Regel- und Systemaufgaben NLRS berücksichtigt werden können. Die Berücksichtigung der Daten im Meldeprotokoll mit zumindest den Betriebsdaten erfolgt in einer externen Steuereinheit 2, die für die Erstellung von nicht ortsgebundenen Regel- und Systemaufgaben für die verbundenen erfindungsgemäßen Energiespeicheranlagen 1, 1', 1" (siehe Figur 5) und deren Übermittlung zu diesen Energiespeicheranlage 1, 1', 1" über das Kommunikationsnetzwerk 3 zuständig ist.

In der in Fig. 1 gezeigten Ausführungsform der Energiespeicheranlage 1 kann beispielsweise auch ein oder mehrere Wettersensoren 17 zur Messung lokaler Wetterbedingungen WB umfassen, wobei die Steuereinheit 13 dann auch dazu vorgesehen ist, Betriebskomponenten der Energiespeicheranlage 1 in Abhängigkeit von den Wetterbedingungen WB zu steuern. Betriebskomponenten bezeichnen alle Komponenten der Energiespeichermodule 11, beispielsweise Nebenaggregate wie Kühlaggregate, Vakuumanlagen etc. Solche Betriebskomponenten werden durch Witterungsbedingungen WB beeinflusst. Beispielsweise muss ein Kühlaggregat bei hohen Außentemperaturen stärker betrieben werden als bei niedrigen Außentemperaturen. Sofern die Energiespeichermodule 11 selber die Energie zum Betreiben der Betriebskomponenten bereitstellen, muss das bei der Planung der Ausführung zukünftiger nicht ortsgebundener und ortsgebundener Regel- und Systemaufgaben NLRS, LRS berücksichtigt werden. Eine höhere Außentemperatur würde die verfügbare Anlagenspeicherkapazität SK und Anlagenleistung L für Aufgaben in den angeschlossenen Stromnetzen 5, 61, 62 verringern. Insofern ermöglicht eine Messung der Wetterdaten eine besser voraussehende und damit effektivere Verwendung der Energiespeicheranlage 1.

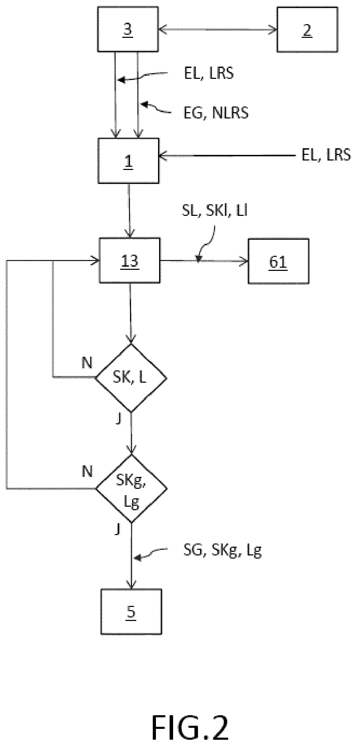

Fig. 2 zeigt ein Ausführungsbeispiel eines Verfahrens zum Betreiben der erfindungsgemäßen Energiespeicheranlage 1. Die Energiespeicheranlage 1 empfängt EG, EL über das Kommunikationsnetzwerk 3 beispielsweise von einer geeigneten externen Steuereinheit 2 nicht ortsgebundene und/oder ortsgebundene Regel- und Systemaufgaben NLRS, LRS. Die ortsgebundenen Regel- und Systemaufgaben können alternativ oder in Ergänzung auch über andere Datenkanäle von der Energiespeicheranlage 1 empfangen werden. Auf Basis der empfangenen ortsgebundenen und nicht ortsgebundenen Regel- und Systemaufgaben LRS, NLRS prüft die Steuereinheit 13 die Ausführbarkeit der empfangenen ortsgebundenen und nicht ortsgebundenen Regel- und Systemaufgaben im Rahmen der Anlagenspeicherkapazität SK und Anlagenleistung L der Energiespeicheranlage 1. Sofern die ortsgebundenen Regel- und Systemaufgaben ausführbar sind, werden diese durch eine vorrangige Steuerung SL im angeschlossenen lokalen Stromnetz 61 mit einer benötigten lokalen Anlagenkapazität SKI und einer lokalen Anlagenleistung LI ausgeführt. Die nicht ortsgebundenen Regel- und Systemaufgaben werden auf ihre generelle Ausführbarkeit im Rahmen der Anlagenspeicherkapazität SK und Anlagenleistung L geprüft. Ist eine Ausführung generell nicht möglich, da die empfangenen, nicht ortsgebundenen Regel- und Systemaufgaben die Möglichkeiten der Energiespeicheranlage 1 überschreiten, wird die Steuereinheit 13 ein entsprechendes Fehlersignal über das Kommunikationsnetzwerk 3 aussenden und diese nicht ortsgebundenen Regel- und Systemaufgaben für eine erneute Ausführung blockieren. Durch die Ausführung der ortsgebundenen Regel- und Systemaufgaben stehen den nicht ortsgebundenen Regel- und Systemaufgaben nur die für die ortsgebundenen Regel- und Systemaufgaben nicht benötigten nicht-lokalen Anlagenkapazität SKg und Anlagenleistung Lg zur Verfügung. Selbst bei im Prinzip durch die Energiespeicheranlage 1 ausführbaren nicht ortsgebundenen Regel- und Systemaufgaben wird nun geprüft, ob diese im Rahmen der freien nicht-lokalen Kapazitäten SKg und freien nicht-lokalen Leistung Lg tatsächlich ausführbar sind. Ergibt die Prüfung, dass die nicht ortsgebundenen Regel- und Systemaufgaben NLRS momentan nicht ausführbar sind, werden diese für die Ausführung durch die Steuereinheit 13 zurückgestellt und beispielsweise im Aufgabenspeicher 18 entsprechend markiert. Ergibt die Prüfung, dass die nicht ortsgebundenen Regel- und Systemaufgaben NLRS momentan ausführbar sind, so steuert SG die Steuereinheit 13 die Energiespeicheranlage 1 entsprechend, dass die nicht ortsgebundenen Regel- und Systemaufgaben NLRS im angeschlossenen nicht-lokalen Stromnetz 5 erfüllt (ausgeführt) werden. Dazu bekommt die Regeleinheit 16 entsprechende Anweisungen für die Steuerung und Aufteilung des Energieflusses EF in einen Energiefluss EFg in das/aus dem nicht-lokalen Stromnetz 5 und einen Energiefluss EFI in das /aus dem lokalen Stromnetz 61 durch die Steuereinheit 13 über eine entsprechende Datenverbindung übermittelt.

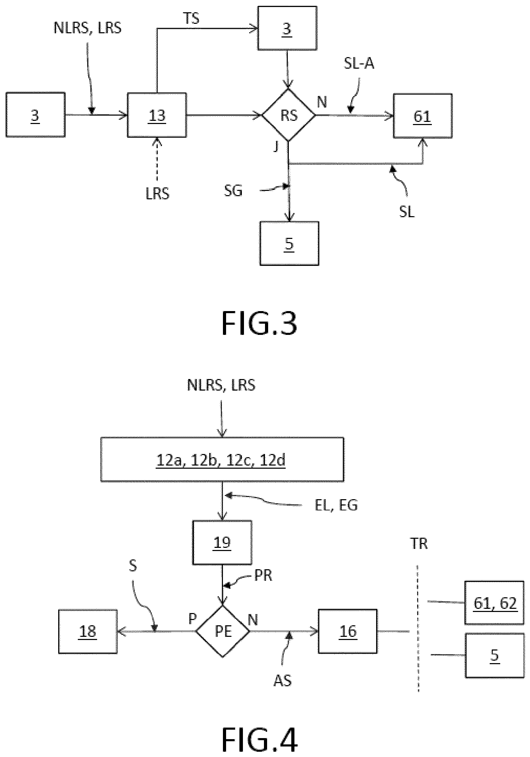

Fig. 3 zeigt ein Ausführungsbeispiel für das erfindungsgemäße Verfahren im Falle einer gestörten Verbindung zum Kommunikationsnetzwerk 3. Bei bestehender Kommunikationsverbindung wurden nicht ortsgebundene Regel- und Systemaufgaben NLRS über das Kommunikationsnetzwerk 3 an die Energiespeicheranlage 1 übermittelt und von dieser empfangen EG und im Aufgabenspeicher 18 abgespeichert, wie bereits in Figur 1 gezeigt. Greift nun die lokale Steuereinheit 13 auf diesen Aufgabenspeicher 18 zu, so wird dabei auch geprüft, ob das Energiespeichersystem 1 weiterhin mit dem Kommunikationsnetzwerk 3 verbunden ist. Ist das Ergebnis der Prüfung, dass eine Kommunikationsverbindung besteht ("J"), beispielsweise durch einen vorstehend beschriebenen durchgeführten digitalen Handschlag mit Aussendung eines Testsignals TS an das Kommunikationsnetzwerk 3 und dem Erhalt eines entsprechenden Rücksignals RS (RS="J"), wird die Energiespeicheranlage 1 vorrangig die ortsgebundenen Regel- und Systemaufgaben LRS für das angeschlossene lokale Stromnetz 61 (in der hier gezeigten Ausführungsform ist nur ein lokales Stromnetz angeschlossen) ausführen SL und im Rahmen der freien nicht-lokalen Kapazitäten SKg und freien nicht-lokalen Leistungen Lg auch die nicht ortsgebundenen Regel- und Systemaufgaben für das nicht-lokale Stromnetz 5 erfüllen SG. Sollte die Prüfung der Kommunikationsverbindung negativ (RS="N") ausfallen, werden ausschließlich die ortsgebundenen Regel- und Systemaufgaben LRS für das lokale Stromnetz 61 durchgeführt SL-A. Durch eine periodische Prüfung der Kommunikationsverbindung kann zu einem späteren Zeitpunkt die Prüfung wieder positiv ausfallen (RS="J"), so dass die Energiespeicheranlage 1 erneut die ortsgebundenen und nicht ortsgebundenen Regel- und Systemaufgaben LRS, NLRS im Rahmen der verfügbaren Kapazitäten und Leistungen SK, SKg, SKI, L, Lg, LI parallel ausführt.

Fig. 4 zeigt ein Ausführungsbeispiel für eine Reaktion der Energiespeicheranlage 1 auf empfangene ortsgebundene und/oder nicht ortsgebundene Regel- und Systemaufgaben LRS, NLRS mit zweifelhafter Herkunft und/oder zweifelhaftem Inhalt. Hierbei werden ortsgebundene und nicht ortsgebundene Regel- und Systemaufgaben LRS, NLRS über eine oder mehrere Schnittstellen 12a, 12b, 12c, 12d von der Energiespeicheranlage 1 empfangen EG, EL und an die Prüfeinheit 19 weitergeleitet. Dort findet eine Prüfung PR der empfangenen EL, EG nicht ortsgebundenen und ortsgebundener Regel- und Systemaufgaben NLRS, LRS auf Plausibilität und Herkunft statt. Die Prüfeinheit 19 umfasst dazu ein entsprechendes Programm mit einer Prüfroutine, das automatisch auf jede empfangene ortsgebundene oder nicht ortsgebundene Regel- und Systemaufgabe LRS, NLRS angewendet wird. Bei einem positiven PP Prüfergebnis PE (PE=PP) werden die empfangenen EL, EG nicht ortsgebundenen und ortsgebundenen Regel- und Systemaufgaben NLRS, LRS im Aufgabenspeicher 18 der Energiespeicheranlage 1 gespeichert S. Die für die Speicherung S zugelassenen Regel- und Systemaufgaben können beispielsweise mit einer entsprechenden Indizierung von der Prüfeinheit (beispielsweise ein gesetztes Bit oder eine andere Markierung) versehen werden. In diesem Fall speichert der Aufgabenspeicher 18 nur entsprechend indizierte Regel- und Systemaufgaben ab. Alternativ kann die Prüfeinheit 19 auch nur die positiv PP geprüften Regel- und Systemaufgaben an den Aufgabenspeicher 18 weiterleiten. In diesem Fall bräuchten die Regel- und Systemaufgaben nicht markiert oder indiziert werden, da negativ geprüfte Regel- und Systemaufgaben von der Prüfeinheit nicht weitergeleitet werden und somit der Aufgabenspeicher keine Erkennung des Prüfergebnissees PE durchführen muss. In einer weiteren alternativen Ausgestaltung kann die Prüfeinheit die geprüften Regel- und Systemaufgaben in einem Zwischenspeicher, beispielsweise in der Prüfeinheit 19, ablegen und dem Arbeitsspeicher 18 eine Datenliste der positiv PP geprüften Regel- und Systemaufgaben zusenden, woraufhin der Aufgabenspeicher 18 automatisch die positiv PP geprüften Regel- und Systemaufgaben aus dem Zwischenspeicher lädt und im Aufgabenspeicher 18 abspeichert. Auf die im Aufgabenspeicher 18 gespeicherten ortsgebundenen und nicht ortsgebundenen Regel- und Systemaufgaben kann die Steuereinheit 13 über eine Datenverbindung zu deren Ausführung zugreifen Z. Die gespeicherten ortsgebundenen Regel- und Systemaufgaben werden simultan, aber vorrangig vor den nicht ortsgebundenen Regel- und Systemaufgaben, ausgeführt. Die simultane Ausführung ist immer möglich, sofern beide Regle- und Systemaufgaben im Rahmen der Anlagenspeicherkapazität und der Anlagenleistung ausführbar sind. Sofern dies nicht gegeben ist, werden die ortsgebundenen Regel- und Systemaufgaben vorrangig ausgeführt. Ist das Prüfergebnis PE dagegen negativ (PE=N), wird ein Alarmsignals AS durch die Prüfeinheit 19 an die Steuereinheit 13 ausgesendet, woraufhin die Steuereinheit 13 eine Trennung TR der Energiespeicheranlage 1 von den angeschlossenen Stromnetzen 5, 61, 62 veranlasst. Diese erfolgte Trennung TR wird durch die gestrichelte senkrechte Linie zwischen Regeleinheit 16 und Stromnetzen 5, 61, 62 schematisch dargestellt.

Fig. 5 zeigt ein Ausführungsbeispiel eines Regelverbunds 4 mit mehreren erfindungsgemäßen Energiespeicheranlagen 1, 1'. Hier sind die Energiespeicheranlagen 1, 1', 1" mit den Steuereinheiten 13, 13', 13" alle dazu vorgesehen ist, einen Regelverbund 4 mit anderen Energiespeicheranlagen zu bilden, die als Regelverbund 4 für eine gemeinsame Steuerung GS gemäß der nicht ortsgebundenen Regel- oder Systemaufgaben NLRS im nicht-lokalen Stromnetz 5 oder gemäß regionaler Regel- und Systemaufgaben RRS in ein oder mehreren lokalen Stromnetzen 61, 62 geeignet oder aufgrund externer Anweisungen vorgesehen sind. In diesem Ausführungsbeispiel bilden die Energiespeicheranlagen 1, 1' einen Regelverbund 4, wobei die Energiespeicheranlagen 1, 1' jeweils an die lokalen Stromnetze 61, 62 sowie an das nicht-lokale Stromnetz 5 angeschlossen sind. Die Energiespeicheranlage 1" ist nicht Teil des Regelverbunds 4 und ist sowohl an das nicht-lokale Stromnetz 5 sowie an das lokale Stromnetz 63 angeschlossen und wird, wie unter Figur 1 beschrieben, betrieben. Die Energiespeicheranlagen 1, 1' in einem Regelverbund 4 sind zur direkten Kommunikation DK mit den jeweiligen anderen Energiespeicheranlagen 1, 1' des Regelverbunds 4 zur Durchführung der gemeinsamen Steuerung GS ausgestattet und vorgesehen. Die direkte Kommunikation DK kann auch über das Kommunikationsnetzwerk 3 erfolgen. Im regionalen Verbund 4 können die Energiespeicheranlagen 1, 1' zusätzliche oder veränderte vorrangige ortsgebundene Regel- und Systemaufgaben als regionale Regel- und Systemaufgaben RRS zur Ausführung in den an den regionalen Verbund 4 angeschlossenen lokalen Stromnetzen 61, 62 ausführen. In der hier gezeigten Ausführungsform kommunizieren die Energiespeicheranlagen 1, 1' des Regelverbunds 4 direkt über das Kommunikationsnetzwerk 3 zur Ausführung der nicht ortsgebundenen Regel- oder Systemaufgaben NLRS und/oder regionalen Regel- und Systemaufgaben RRS. Alternativ können die Energiespeicheranlagen 1, 1' von extern (beispielsweise von einer externen Steuereinheit 2) über das Kommunikationsnetzwerk 3 eine Anweisung zur Bildung eines Regelverbunds 4 empfangen. Dabei kann auch eine Hierarchie H der Steuereinheitenen 13, 13' der Energiespeicheranlagen 1, 1' zur Führung des Regelverbunds 4 zusammen mit der Anweisung zur Bildung eines Regelverbunds 4 empfangen werden. Anhand der Hierarchie H kann bei Ausfall der mit der Steuerung beauftragten Steuereinheit 13 der Energiespeicheranlage 1 die in der Hierarchie H folgende Steuereinheit 13' der Energiespeicheranlage 1' die Steuerung des Regelverbunds 4 übernehmen.

Fig. 6 zeigt ein Ausführungsbeispiel für das erfindungsgemäße Verfahren im Falle eines Ausfalls 5A des nicht-lokalen Stromnetzes 5. In diesem Ausführungsbeispiel wurde vorab ein Regelverbund 4 aus mehreren Energiespeicheranlagen 1 erstellt, der für eine Schwarzstartunterstützung SU bereitsteht, sofern das nicht-lokale Stromnetz 5 ausfallen 5A sollte. Die Energiespeicheranlagen 1 prüfen kontinuierlich, beispielsweise über die entsprechenden Regeleinheiten 16, das Vorhandensein des nicht-lokalen Stromnetzes 5. Wenn die Prüfung ergibt, dass das nicht-lokale Stromnetz vorhanden ist (5A = N), werden die Energiespeicheranlagen 1 im Normalbetrieb NB (wie für Figur 1 dargestellt) weiter betrieben, so dass die Energiespeicheranlagen 1 gemäß der ortsgebundenen und nicht ortsgebundenen Regel- und Systemaufgaben LRS, NLRS gesteuert SL, SG werden. Wenn die Prüfung ergibt, dass das nicht-lokale Stromnetz 5 ausgefallen ist (5A = J), erhält die Schwarzstartunterstützung SU für das nicht-lokale Stromnetz 5 Vorrang vor den ortsgebundenen Regel- und Systemaufgaben LRS (dargestellt durch den gestrichelten Pfeil zum lokalen Stromnetz 61). Die lokalen Energiespeicheranlagen im Regelverbund 4 werden nach oder mit entsprechender Synchronisation der Einspeisefrequenz gemeinsam einen Schwarzstart für das nicht-lokale Stromnetz 5 durchführen. Sobald der Schwarzstart gelungen ist, werden wieder die ortsgebundenen Regel- und Systemaufgaben LRS mit Vorrang durchgeführt.

Fig.7 zeigt ein Ausführungsbeispiel der Regeleinheit 16, die in diesem Ausführungsbeispiel an ein lokales Stromnetz 61 und an ein nicht-lokales Stromnetz 5 angeschlossen ist. Damit die Regeleinheit 16 den Energiefluss EF zwischen den angeschlossenen Stromnetzen 5, 61 und der Energiespeicheranlage 1 regeln und im Bedarfsfall ein oder mehrere der angeschlossenen Stromnetze, hier das lokale Stromnetz 61 und/oder das nicht-lokale Stromnetz 5, von der lokalen Energiespeicheranlage 1 trennen kann, umfasst die Regeleinheit 16 in dieser Ausführungsform eine Regelbox 9 mit einem Regelglied 9-1 und separate Trennschalter 9-2 für jedes der angeschlossenen Stromnetze 5, 61. Die lokale Steuereinheit 13 ist über eine Datenverbindung mit dem Regelglied 9-1 der Regelbox 9 verbunden und übermittelt der Regelbox 9, hier direkt dem Regelglied 9-1, zur Steuerung der Energieflüsse entsprechende Konfigurationsdaten der Reglerfunktion KD. Aufgrund der Konfigurationsdaten der Reglerfunktion KD steuert das Regelglied 9-1 die Verteilung des vom Aufschaltpunkt 8 eingehenden Energieflusses EF auf die angeschlossenen Stromnetze 5, 61 als Energiefluss EFI für das lokale Stromnetz 61 und als Energiefluss EFg für das nicht-lokale Stromnetz 5. In diesem Ausführungsbeispiel ist lediglich exemplarisch die Verteilung des Energieflusses EF bei Einspeisung von Energie in beide angeschlossene Stromnetze 5, 61 gezeigt. Die Regelbox 9 ist gleichermaßen dafür ausgestaltet, einen Energiefluss aus einem der angeschlossenen Stromnetze 5, 61 und einen Energiefluss in das andere angeschlossene Stromnetz 61, 5 zu steuern, wobei je nach Größe der beiden Energieflüsse entweder der negative Energieüberschuss von der Energiespeicheranlage 1 gespeichert oder der positive Energieüberschuss von der Energiespeicheranlage 1 bereitgestellt wird. Die Energiespeicheranlage 1 ist hier nicht explizit gezeigt, sondern nur symbolisch über die entsprechenden Komponenten 13, 15, 16 dargestellt. Die Regelbox 9 empfängt von entsprechenden Messeinheiten 15 simultan die relevanten Daten RD aus beiden angeschlossenen Stromnetzen 5, 61, woraus das Regelglied 9-1 das Vorhandensein der beiden angeschlossenen Stromnetze 5, 61 mittels in dem Regelglied 9-1 hinterlegten Kriterien oder Schwellwerte für die relevanten Daten RD ableitet. Sollte eines oder beide der angeschlossenen Stromnetze 5, 61 aufgrund eines Netzausfalls nicht mehr zur Verfügung stehen, so manifestiert sich der Ausfall des jeweiligen Stromnetzes 5, 61 in den entsprechenden, an das Regelglied 9-1 übermittelten relevanten Daten RD, woraufhin das Regelglied 9-1 automatisch entsprechende Trenn-Anweisungen (gestichelter Pfeil) an den oder die betreffenden Trennschalter 9-2 zur Trennung der Energiespeicheranlage 1 von dem oder den angeschlossenen Stromnetzen 5, 61 aussendet, woraufhin der oder die Trennschalter 9-2 das oder die vormals angeschlossenen Stromnetze 5, 61 von der Energiespeicheranlage 1 trennen. Die Trennung des angeschlossenen Stromnetzes erfolgt dabei innerhalb weniger Millisekunden. Bei der Trennung von nur einem Stromnetz bleibt die Energiespeicheranlage 1 weiterhin für die anderen noch weiterhin angeschlossenen Stromnetze betriebsbereit. Damit kann bei Ausfall eines Stromnetzes ein Kurzschluss oder eine Überlastsituation effektiv verhindert werden. Das hier gezeigte Ausführungsbeispiel mit einem angeschlossenen lokalen Stromnetz 61 und einem angeschlossenen nicht-lokalen Stromnetz 5 ist nur ein Bespiel für zwei angeschlossene Stromnetze. Die Regeleinheit 16, insbesondere die Regelbox 9, kann in anderen Ausführungsformen auch an mehr als zwei Stromnetze angeschlossen sein. Die zwei oder mehr angeschlossenen Stromnetze können auch jeweils lokale Stromnetze sein, von denen zumindest eines der lokalen Stromnetze mit dem nicht-lokalen Stromnetz zur Ausführung der nicht ortsgebundenen Regel- und Systemaufgaben verbunden ist

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erfindungsgemäße Energiespeicheranlage
- 1', 1": weitere erfindungsgemäße Energiespeicheranlagen
- 11: Energiespeichermodul der Energiespeicheranlage
- 11a, 11b, 11c: Modulsteuereinheit der einzelnen Energiespeichermodule
- 12a, 12b, 12c: Schnittstellen der Energiespeicheranlage zu einem Kommunikationsnetz
- 12d: Schnittstellen der Energiespeicheranlage bezüglich anderer Datenträger
- 13: Steuereinheit der Energiespeicheranlage
- 14: Schwungradenergiespeicher
- 15: Messeinheit der Energiespeicheranlage
- 16: Regeleinheit zum Anschluss der Energiespeicheranlage an die Stromnetze
- 17: Wettersensor
- 18: Aufgabenspeicher der Energiespeicheranlage
- 19: Prüfeinheit
- 2: externe Steuereinheit
- 3: Kommunikationsnetzwerk
- 31: kabelgebundenes Sub-Kommunikationsnetz
- 32: funkgebundenes Sub-Kommunikationsnetze
- 33: stromgebundenes Sub-Kommunikationsnetze
- 4: Regelverbund aus mehreren Energiespeicheranlagen
- 5: nicht-lokales Stromnetz
- 5A: Ausfall des nicht-lokalen Stromnetzes
- 61, 62, 63: lokales Stromnetz
- 7: Datenverbindung
- 8: Aufschaltpunkt
- 9: Regelbox
- 9-1: Regelglied
- 9-2: Trennschalter

- AS: Alarmsignal
- BD: Betriebsdaten der lokalen Energiespeicheranlage
- DK: direkte Kommunikation zwischen Energiespeicheranlagen in einem Regelverbund
- EF: Energiefluss
- EFg: Energiefluss zum nicht-lokalen Stromnetz
- EFI: Energiefluss zum lokalen Stromnetz
- EG: Empfangen der nicht ortsgebundenen Regel- und Systemaufgaben
- EL: Empfangen der ortsgebundenen Regel- und Systemaufgaben
- En: Aufnahme von Energie aus dem Stromnetz durch die Energiespeicheranlage (Bereitstellung negativer Energie)
- Ep: Abgabe von Energie in das Stromnetz durch die Energiespeicheranlage (Bereitstellung positiver Energie)
- H: Hierarchie der Führung im Regelverbund oder im regionalen Verbund
- HS: Prüfen des Bestehens der Kommunikationsverbindung
- KD: Konfigurationsdaten der Regelfunktion
- L: Anlagenleistung der Energiespeicheranlage (Gesamtleistung)
- Lg: für die nicht ortsgebundenen Regel- und Systemaufgaben verfügbare Anlagenleistung (nicht-lokale Leistung)
- LI: für die ortsgebundenen Regel- und Systemaufgaben vorgesehene Anlagenleistung (lokale Leistung)
- LRS: Ortsgebundene Regel- und Systemaufgaben
- MP: Meldeprotokoll
- NP: negatives Prüfergebnis
- NB: Normalbetrieb
- NLRS: nicht ortsgebundene Regel- und Steueraufgaben
- PP: positives Prüfergebnis
- PE: Prüfergebnis
- PR: Prüfen der empfangenen NLRS, LRS
- RD: relevante Daten des lokalen Stromnetzes
- RRS: regionale Regel- und Systemaufgaben
- RS: Rücksignal zum Testsignal
- S: Speichern der empfangenen NLRS, LRS
- SG: Steuern der jeweiligen lokalen Energiespeicheranlage für nicht ortsgebundene Regel- und Systemaufgaben
- SK: Anlagenspeicherkapazität der Energiespeicheranlage (Gesamtkapazität)
- SKg: für die nicht ortsgebundenen Regel- und Systemaufgaben verfügbare lokale Anlagenspeicherkapazität (nicht-lokale Kapazität)
- SKI: für die ortsgebundenen Regel- und Systemaufgaben vorgesehene lokale Anlagenspeicherkapazität (lokale Kapazität)
- SL: Steuern der jeweiligen lokalen Energiespeicheranlage für ortsgebundene Regel- und Systemaufgaben
- SL-A: ausschließliches Steuern der jeweiligen lokalen Energiespeicheranlage für ortsgebundene Regel- und Systemaufgaben
- SU: Schwarzstartunterstützung
- TR: Trennen der Energiespeicheranlage von den angeschlossenen Stromnetzen
- TS: Testsignal
- WB: Wetterbedingungen
- Z: Zugreifen der lokalen Steuereinheit auf den Aufgabenspeicher

## Patentansprüche

1. Eine Energiespeicheranlage (1) mit mindestens einem Energiespeichermodul (11) und einer Anlagenspeicherkapazität (SK) und einer Anlagenleistung (L) zur Aufnahme (En) und Abgabe (Ep) von Energie an die an die Energiespeicheranlage (1) angeschlossenen Stromnetze (5, 61, 62), wobei die Energiespeicheranlage (1) für einen Anschluss an ein nicht-lokales Stromnetz (5) zur Ausführung empfangener nicht ortsgebundener Regel- und Systemaufgaben (NLRS) umfassend eine Bereitstellung von primärer und sekundärer Regelleistung in Übertragungs- oder Verteilernetzen des öffentlichen Stromnetzes als nicht-lokale-Stromnetze (5) vorgesehen ist,
**dadurch charakterisiert,**
dass die Energiespeicheranlage (1) zusätzlich für einen Anschluss an ein oder mehrere betriebsinterne Stromnetze, Stromnetze innerhalb eines Hauses oder innerhalb Gebäudekomplexes oder Stromnetze eines Windenergieparks oder eines Solarkraftwerks als räumlich stark begrenzte lokale Stromnetze (61, 62) zur Ausführung empfangener ortsgebundener Regel- und Systemaufgaben (LRS) zur Verbesserung einer lokalen Netzqualität in dem oder den lokalen Stromnetzen (61, 62) vorgesehen und dazu ausgestaltet ist, über mindestens eine Schnittstelle (12a, 12b, 12c) der Energiespeicheranlage mit einem Kommunikationsnetzwerk (3) verbunden zu werden und über das Kommunikationsnetzwerk (3) zumindest die nicht ortsgebundenen Regel- und Systemaufgaben (NLRS) zu empfangen, und eine Steuereinheit (13) umfasst, die zur Steuerung (SL, SG) der die Aufnahme (En) und Abgabe (Ep) von Energie aus oder in die angeschlossenen Stromnetze (5, 61, 62) gemäß der ortsgebundenen und nicht ortsgebundenen Regel- und Systemaufgaben (LRS, NLRS) simultan für alle angeschlossenen Stromnetze (5, 61, 62) ausgestaltet ist, wobei die Steuereinheit (13) dazu ausgestaltet ist, die nicht ortsgebundenen Regel- und Systemaufgaben (NLRS) nur im Rahmen (11) der freien Anteile (SKg, Lg) der Anlagenspeicherkapazitäten (SK) und/oder Anlagenleistung (L) zu steuern (SG), die nicht für die ortsgebundenen Regel- und Systemaufgaben (LRS) benötigt werden,
wobei die Energiespeicheranlage (1) eine oder mehrere Messeinheiten (15) zur Messung ein oder mehrerer relevanter Daten (RD) im jeweiligen angeschlossenen lokalen Stromnetz (61, 62) umfasst und dass die Steuereinheit (11) dazu vorgesehen ist, die Steuerung der Energiespeicheranlage (1) für die ortsgebundenen Regel- und Systemaufgaben (LRS) in diesem lokalen Stromnetz (61, 62) auf Basis der gemessenen relevanten Daten (RD) auszuführen.

2. Die Energiespeicheranlage (1) nach Anspruch 1,
**dadurch gekennzeichnet,**
**dass** das Energiespeichermodul (11) einen oder mehrere Schwungradenergiespeicher (14) zur reversiblen Speicherung von Energie innerhalb der Energiespeicheranlage umfasst.

3. Die Energiespeicheranlage (1) nach Anspruch 1 oder 2,
**dadurch gekennzeichnet,**
**dass** die Energiespeicheranlage (1) mehrere Energiespeichermodule (11) umfasst, von denen jedes Energiespeichermodul (11) eine Modulsteuereinheit (11a, 11b, 11c) zur Ausführung von durch die Steuereinheit (13) den einzelnen Energiespeichermodulen 11) über entsprechende Datenverbindungen (7) zugewiesenen Aufgaben im Rahmen der ortsgebundenen und nicht ortsgebundenen Regel- und Systemaufgaben (LRS, NLRS) umfasst.

4. Die Energiespeicheranlage (1) nach einem der vorstehenden Ansprüche, **dadurch gekennzeichnet,**
**dass** die Energiespeicheranlage (1) dazu vorgesehen ist, einen Regelverbund (4) mit anderen Energiespeicheranlagen (1') zu bilden, die als Regelverbund (4) für eine gemeinsame Steuerung (GS) gemäß der nicht ortsgebundenen Regel- oder Systemaufgaben (NLRS) im nicht-lokalen Stromnetz (5) oder gemäß regionaler Regel- und Systemaufgaben (RRS) in ein oder mehreren lokalen Stromnetzen (61, 62) vorgesehen sind und dass die Energiespeicheranlage (1) zur Kommunikation mit den anderen Energiespeicheranlagen (1') zur Durchführung der gemeinsamen Steuerung (GS) ausgestattet ist.

5. Die Energiespeicheranlage (1) nach einem der vorstehenden Ansprüche, **dadurch gekennzeichnet,**
**dass** die Energiespeicheranlage (1) über eine Regeleinheit (16) an das eine oder die mehreren lokalen Stromnetze (61, 62) und das nicht-lokale Stromnetz (5) angeschlossen ist, wobei die Regeleinheit (16) dazu ausgestaltet ist, einen Energiefluss (EF, EFg, EFI) zwischen den angeschlossenen Stromnetzen (5, 61, 62) und der Energiespeicheranlage (1) zu regeln, vorzugsweise ist die Regeleinheit (16) außerdem dazu vorgesehen, ein oder mehrere der angeschlossenen Stromnetze (5, 61, 62) im Bedarfsfall von der Energiespeicheranlage (1) zu trennen.

6. Die Energiespeicheranlage (1) nach einem der vorstehenden Ansprüche, **dadurch gekennzeichnet,**
**dass** die Energiespeicheranlage (1) dazu vorgesehen ist, periodisch ein Testsignal (TS) über das Kommunikationsnetzwerk (3) auszusenden und ein entsprechendes Rücksignal (RS) zu empfangen, wobei das Empfangen des Rücksignals (RS) die bestehende Verbindung zum Kommunikationsnetzwerk (3) belegt.

7. Die Energiespeicheranlage (1) nach Anspruch 6,
**dadurch gekennzeichnet,**
**dass** die Energiespeicheranlage (1) mehrere Schnittstellen (12a, 12b, 12c) zu Sub-Kommunikationsnetzen (31, 32, 33) im Kommunikationsnetzwerk (3) umfasst und dazu ausgestaltet ist, im Falle einer unterbrochenen Verbindung die Verbindung über ein im Kommunikationsnetzwerk (3) vorhandenes alternatives Sub-Kommunikationsnetz (31, 32, 33) wieder herzustellen.

8. Die Energiespeicheranlage (1) nach Anspruch 6 oder 7,
**dadurch gekennzeichnet,**
**dass** die Energiespeicheranlage (1) während einer nicht vorhandenen Verbindung zum Kommunikationsnetzwerk (3) zur ausschließlichen Durchführung (SL-A) der ortsgebundenen Regel- und Systemaufgaben (LRS) für das oder die jeweiligen lokalen Stromnetze (61, 62) vorgesehen ist.

9. Die Energiespeicheranlage (1) nach einem der vorstehenden Ansprüche, **dadurch gekennzeichnet,**
**dass** die Energiespeicheranlage (1) einen Aufgabenspeicher (18) zur Speicherung der empfangenen nicht ortsgebundenen und ortsgebundenen Regel- und Systemaufgaben (NLRS, LRS) umfasst, auf den die Steuereinheit (13) zur Steuerung der Energiespeicheranlage (1) gemäß der nicht ortsgebundenen und ortsgebundenen Regel- oder Systemaufgaben (NLRS, LRS) zugreift.

10. Die Energiespeicheranlage (1) nach Anspruch 9,
**dadurch gekennzeichnet,**
**dass** die Energiespeicheranlage (1) eine Prüfeinheit (19) umfasst, die zur Prüfung (PR) der empfangenen nicht ortsgebundenen und ortsgebundener Regel- und Systemaufgaben (NLRS, LRS) vor der Speicherung (S) im Aufgabenspeicher (18) auf Plausibilität und Herkunft vorgesehen ist und die Speicherung (S) im Aufgabenspeicher (18) nur bei einem positiven (PP) Prüfergebnis (PE) erfolgt.

11. Die Energiespeicheranlage (1) nach Anspruch 10,
**dadurch gekennzeichnet,**
**dass** die Prüfeinheit (19) dazu ausgestaltet ist, bei einem negativen (NP) Prüfergebnis (PE) ein Alarmsignal (AS) an die Steuereinheit (13) auszusenden und die Steuereinheit (13) dazu ausgestaltet ist, infolge des Alarmsignals (AS) die Energiespeicheranlage (1) von den angeschlossenen Stromnetzen (5, 61, 62) zu trennen (TR).

12. Die Energiespeicheranlage (1) nach einem der vorstehenden Ansprüche, **dadurch gekennzeichnet,**
**dass** die Steuereinheit (13) dazu ausgestaltet ist, Betriebsdaten (BD) der Energiespeicheranlage (1) zu erfassen, auszuwerten und ein Meldeprotokoll (MP) umfassend die Betriebsdaten (BD) über das Kommunikationsnetz (3) auszusenden, damit zumindest die Betriebsdaten (BD) für die zu empfangenden nicht ortsgebundenen Regel- und Systemaufgaben (NLRS) berücksichtigt werden können.

13. Ein Verfahren zum Betreiben einer Energiespeicheranlage (1) nach Anspruch 1, die an ein Übertragungs- oder Verteilernetz des öffentlichen Stromnetzes als nicht-lokales Stromnetz (5) zur Ausführung nicht ortsgebundener Regel- und Systemaufgaben (NLRS)) umfassend eine Bereitstellung von primärer und sekundärer Regelleistung und/oder an ein oder mehrere betriebsinterne Stromnetze, Stromnetze innerhalb eines Hauses oder innerhalb Gebäudekomplexes oder Stromnetze eines Windenergieparks oder eines Solarkraftwerks als räumlich stark begrenzte lokale Stromnetze (61, 62) zur Ausführung ortsgebundener Regel- und Systemaufgaben (LRS) zur Verbesserung einer lokalen Netzqualität angeschlossenen ist und eine Anlagenspeicherkapazität (SK) und eine Anlagenleistung (L) mit ein oder mehreren Energiespeichermodulen (11) zur Aufnahme (En) und Abgabe (Ep) von Energie aus/an die angeschlossenen Stromnetze (5, 61, 62) besitzt, umfassend die Schritte:
- Empfangen (EL) der ortsgebundenen Regel- und Systemaufgaben (LRS) zur Ausführung in dem oder den angeschlossenen lokalen Stromnetzen (61, 62),
- Steuern (SL) von Aufnahme (En) oder Abgabe (Ep) von Energie aus dem oder in das lokale Stromnetz (61, 62) gemäß der empfangenen ortsgebundenen Regel- und Systemaufgaben (LRS) mittels einer Steuereinheit (13) im Rahmen eines für das oder die lokalen Stromnetze (61, 62) vorgesehenen Anteils (SKI, LI) der Anlagenspeicherkapazität (SK) und/oder Anlagenleistung (L) der Energiespeicheranlage (1),
- Empfangen (EG) zumindest der nicht ortsgebundenen Regel- und Systemaufgaben (NLRS) zur Ausführung in dem angeschlossenen nicht-lokalen Stromnetz (61, 62) über mindestens eine mit einem Kommunikationsnetzwerk (3) verbundenen Schnittstelle (12a, 12b, 12c) der Energiespeicheranlage (1), und
- simultanes Steuern (SG) der Aufnahme (En) oder Abgabe (Ep) von Energie aus oder in das nicht-lokale Stromnetz (5) gemäß der empfangenen nicht ortsgebundenen Regel- und Systemaufgaben (NLRS) im Rahmen des nicht für die ortsgebundenen Regel- und Systemaufgaben (LRS) benötigten freien Anteils (SKg, Lg) der Anlagenspeicherkapazitäten (SK) und/oder der Anlagenleistung (L) der Energiespeicheranlage (1) durch dieselbe Steuereinheit (13),
wobei die Energiespeicheranlage (1) mittels eine oder mehrere Messeinheiten (15) ein oder mehrerer relevanter Daten (RD) im jeweiligen angeschlossenen lokalen Stromnetz (61, 62) misst und die Steuereinheit (11) Energiespeicheranlage (1) so steuert, dass die ortsgebundenen Regel- und Systemaufgaben (LRS) in diesem lokalen Stromnetz (61, 62) auf Basis der gemessenen relevanten Daten (RD) ausgeführt werden.

14. Das Verfahren nach Anspruch 13 umfassend die weiteren Schritte:
- Prüfen (PR) der empfangenen (EL, EG) nicht ortsgebundenen und ortsgebundener Regel- und Systemaufgaben (NLRS, LRS) mittels einer Prüfeinheit (19) auf Plausibilität und Herkunft,
- Speichern (S) der empfangenen (EL, EG) nicht ortsgebundenen und ortsgebundener Regel- und Systemaufgaben (NLRS, LRS) in einem Aufgabenspeicher (18) der Energiespeicheranlage (1) bei einem positiven (PP) Prüfergebnis (PE),
- Zugreifen (Z) der lokalen Steuereinheit (11) auf die im Aufgabenspeicher (18) gespeicherten nicht ortsgebundenen und ortsgebundenen Regel- und Systemaufgaben (NLRS, LRS) zur Steuerung (SG, SL) der Energiespeicheranlage (1),
- vorrangiges Steuern (SL) der Energiespeicheranlage (1) für ortsgebundene Regel- und Systemaufgaben (LRS) durch die Steuereinheit (11) gemäß der im Aufgabenspeicher (18) gespeicherten nicht ortsgebundenen und ortsgebundener Regel- und Systemaufgaben (NLRS, LRS), und
- Aussenden eines Alarmsignals (AS) durch die Prüfeinheit (19) an die Steuereinheit (13) bei einem negativen (NP) Prüfergebnis (PE), woraufhin die Steuereinheit (13) eine Trennung (TR) der Energiespeicheranlage (1) von den angeschlossenen Stromnetzen (5, 61, 62) veranlasst.

## Claims

1. An energy storage system (1) is provided having at least one energy storage module (11) and also having a system storage capacity (SK) as well as a system output (L) to withdraw (En) and release (Ep) energy to the power networks (5, 61, 62) that are connected to the energy storage system (1), whereby the energy storage system (1) is provided for connection to a non-local power network (5) in order to carry out received, non-location-bound regulation and system tasks (NLRS), comprising the provision of primary and secondary operating reserve in transmission or distribution networks of the public power grid as a non-local power network (5),
**characterized in that**
the energy storage system (1) is additionally provided for connection to one or more inplant power networks, power networks within a single building or within building complexes or power networks of a wind power plant or of a solar power plant as geographically very limited local power networks (61, 62) in order to carry out received location-bound regulation and system tasks (LRS) so as to improve the quality of a local network in the local power network(s) (61, 62), and said energy storage system (1) is configured in such a way that, via at least one interface (12a, 12b, 12c) of the energy storage system, it can be connected to a communication network (3) and in such a way that it can receive at least the non-location-bound regulation and system tasks (NLRS) via the communication network (3), and said energy storage system (1) comprises a control unit (13) that is configured to control (SL, SG) the withdrawal (En) of energy from and the release (Ep) of energy into the connected power networks (5, 61, 62) in accordance with the location-bound and non-location-bound regulation and system tasks (LRS, NLRS) simultaneously for all of the connected power networks (5, 61, 62), whereby the control unit (13) is configured to control (SG) the non-location-bound regulation and system tasks (NLRS) only within the scope (11) of the free portions (SKg, Lg) of the system storage capacities (SK) and/or the system output (L) that are not needed for the location-bound regulation and system tasks (LRS),
whereby the energy storage system (1) comprises one or more measuring units (15) for measuring one or more pieces of relevant data (RD) in the appertaining connected local power network (61, 62), and **in that** the control unit (11) is configured to execute the control of the energy storage system (1) for the location-bound regulation and system tasks (LRS) in this local power network (61, 62) on the basis of the measured relevant data (RD).

2. The energy storage system (1) according to claim 1,
**characterized in that**
the energy storage module (11) comprises one or more flywheel energy storage devices (14) to reversibly store energy in the energy storage system.

3. The energy storage system (1) according to claim 1 or 2,
**characterized in that**
the energy storage system (1) has several energy storage modules (11), each of which comprises a module control unit (11a, 11b, 11c) in order to carry out tasks assigned by the control unit (13) to the individual energy storage modules (11) via appropriate data connections (7) within the scope of the location-bound and non-location-bound regulation and system tasks (LRS, NLRS).

4. The energy storage system (1) according to one of the preceding claims,
**characterized in that**
the energy storage system (1) is configured to form an interconnection grid (4) with other energy storage systems (1') that are provided as an interconnection grid (4) for joint control (GS) in accordance with the non-location-bound regulation and system tasks (NLRS) in the non-local power network (5), or else in accordance with regional regulation and system tasks (RRS) in one or more local power networks (61, 62), and **in that** the energy storage system (1) is configured to communicate with the other energy storage systems (1') in order to execute the joint control (GS).

5. The energy storage system (1) according to one of the preceding claims,
**characterized in that**
the energy storage system (1) is connected via a regulation unit (16) to the one or more local power networks (61, 62) and to the non-local power network (5), whereby the regulation unit (16) is configured to regulate an energy flow (EF, EFg, EFI) between the connected power networks (5, 61, 62) and the energy storage system (1), and moreover, the regulation unit (16) is preferably configured to disconnect one or more of the connected power networks (5, 61, 62) from the energy storage system (1) whenever necessary.

6. The energy storage system (1) according to one of the preceding claims,
**characterized in that**
the energy storage system (1) is provided to periodically emit a test signal (TS) via the communication network (3) and to receive a corresponding return signal (RS), whereby the receipt of the return signal (RS) confirms the existence of a connection to the communication network (3).

7. The energy storage system (1) according to claim 6,
**characterized in that**
the energy storage system (1) comprises several interfaces (12a, 12b, 12c) to sub-communication networks (31, 32, 33) in the communication network (3), and it is configured so that, if the connection is interrupted, it can restore the connection via an alternative sub-communication network (31, 32, 33) that is present in the communication network (3).

8. The energy storage system (1) according to claim 6 or 7,
**characterized in that**,
in the absence of a connection to the communication network (3), the energy storage system (1) is configured to exclusively carry out (SL-A) the location-bound regulation and system tasks (LRS) for the appertaining local power network(s) (61, 62).

9. The energy storage system (1) according to one of the preceding claims,
**characterized in that**
the energy storage system (1) has a task storage unit (18) to store the received location-bound and non-location-bound regulation and system tasks (LRS, NLRS) which the control unit (13) accesses in order to control the energy storage system (1) in accordance with the location-bound and non-location-bound regulation and system tasks (LRS, NLRS).

10. The energy storage system (1) according to claim 9,
**characterized in that**
the energy storage system (1) comprises a verification unit (19) that is provided to verify (PR) the plausibility and the origin of the received location-bound and non-location-bound regulation and system tasks (LRS, NLRS) before they are stored (S) in the task storage unit (18), and the storage (S) in the task storage unit (18) is only carried out in case of a positive (PP) verification result (PE).

11. The energy storage system (1) according to claim 10,
**characterized in that**
the verification unit (19) is configured so that, in case of a negative (NP) verification result (PE), it sends an alarm signal (AS) to the control unit (13), and the control unit (13) is configured to respond to the alarm signal (AS) by disconnecting (TR) the energy storage system (1) from the connected power networks (5, 61, 62).

12. The energy storage system (1) according to one of the preceding claims,
**characterized in that**
the control unit (13) is configured to acquire operating data (BD) of the energy storage system (1), to evaluate it and to send an event log (MP) containing the operating data (BD) via the communication network (3), so that at least the operating data (BD) for the received, non-location-bound regulation and system tasks (NLRS) can be taken into account.

13. A method for operating an energy storage system (1) according to claim 1, that is connected to a transmission or distribution network of the public mains network as a non-local power network (5) in order to carry out non-location-bound regulation and system tasks (NLRS), comprising the provision of primary and secondary operating reserve, and that is also connected to one or more in-plant power networks, power networks within a single building or within building complexes or power networks of a wind power plant or of a solar power plant as geographically very limited local power networks (61, 62) in order to carry out location-bound regulation and system tasks (LRS) so as to improve the quality of a local network, and it has a system storage capacity (SK) and a system output (L) with one or more energy storage modules (11) to withdraw (En) energy from and to release (Ep) energy into the connected power networks (5, 61, 62), comprising the following steps:
• the location-bound regulation and system tasks (LRS) for execution in the local power network(s) (61, 62) are received (EL),
• the withdrawal (En) of energy from or the release (Ep) of energy into the connected power networks (5, 61, 62) is controlled (SL) in accordance with the received location-bound regulation and system tasks (LRS) by means of a control unit (13) within the scope of a portion (SKI, LI) of the system storage capacity (SK) and/or the system output (L) of the energy storage system (1) that is provided for the local power network(s) (61, 62),
• at least the non-location-bound regulation and system tasks (NLRS) for execution in the connected non-local power network (61, 62) are received (EG) via at least one interface (12a, 12b, 12c) of the energy storage system (1) that is connected to a communication network (3), and
• the withdrawal (En) of energy from or the release (Ep) of energy into the non-local power network (5) is simultaneously controlled (SG) by the same control unit (13) in accordance with the received non-location-bound regulation and system tasks (NLRS), within the scope of the free portion (SKg, Lg) of the system storage capacities (SK) and/or of the system output (L) of the energy storage system (1) that is not needed for the location-bound regulation and system tasks (LRS), whereby the energy storage system (1), by means of one or more measuring units (15), measures one or more pieces of relevant data (RD) in the appertaining connected local power network (61, 62), and the control unit (11) controls the energy storage system (1) in such a way that the location-bound regulation and system tasks (LRS) in this local power network (61, 62) are carried out on the basis of the measured relevant data (RD).

14. The method according to claim 13, comprising the following additional steps:
• the plausibility and the origin of the received (EL, EG) location-bound and non-location-bound regulation and system tasks (LRS, NLRS) are checked (PR) by means of a verification unit (19),
• the received (EL, EG) location-bound and non-location-bound regulation and system tasks (LRS, NLRS) are stored (S) in a task storage unit (18) of the energy storage system (1) in case of a positive (PP) verification result (PE),
• the local control unit (11) accesses (Z) the location-bound and non-location-bound regulation and system tasks (LRS, NLRS) that are stored in the task storage unit (18) in order to control (SG, SL) the energy storage system (1),
• the control unit (11) gives priority to the control (SL) of the energy storage system (1) for the location-bound regulation and system tasks (LRS) in accordance with the location-bound and non-location-bound regulation and system tasks (LRS, NLRS) that are stored in the task storage unit (18), and
• in case of a negative (NP) verification result (PE), an alarm signal (AS) is sent to the control unit (13) by the verification unit (19), in response to which the control unit (13) disconnects (TR) the energy storage system (1) from the connected power networks (5, 61, 62).

## Revendications

1. Installation de stockage d'énergie (1) avec au moins un module de stockage d'énergie (11) et une capacité de stockage de l'installation (SK) et une puissance de l'installation (L) pour absorber (En) et délivrer (Ep) de l'énergie aux réseaux électriques (5, 61, 62) raccordés à l'installation de stockage d'énergie (1), l'installation de stockage d'énergie (1) étant prévue pour un raccordement à un réseau électrique non local (5) pour l'exécution de tâches de régulation et du système non fixes reçues (NLRS), incluant une fourniture d'une puissance de régulation primaire et secondaire dans des réseaux de transport ou de distribution du réseau électrique public en tant que réseau électrique non local (5),
**caractérisée en ce que**
l'installation de stockage d'énergie (1) est en outre prévue pour un raccordement à un ou plusieurs réseaux électriques internes d'une exploitation, réseaux électriques dans une maison ou un complexe de bâtiments ou réseaux électriques d'un parc éolien ou d'une centrale électrique solaire en tant que réseaux électriques locaux (61, 62) très limités dans l'espace pour l'exécution de tâches de régulation et du système fixes reçues (LRS) pour améliorer une qualité de réseau locale dans le ou les réseaux électriques (61, 62), et est conçue pour être reliée à un réseau de communication (3) via au moins une interface (12a, 12b, 12c) de l'installation de stockage d'énergie et pour recevoir, via le réseau de communication (3), au moins les tâches de régulation et du système non fixes (NLRS), et comprend une unité de commande (13) qui est conçue pour commander (SL, SG), simultanément pour tous les réseaux électriques raccordés (5, 61, 62), l'absorption (En) et la délivrance (Ep) d'énergie à partir des ou aux réseaux électriques raccordés (5, 61, 62) conformément aux tâches de régulation et du système fixes et non fixes (LRS, NLRS),
l'unité de commande (13) étant conçue pour commander (SG) les tâches de régulation et du système non fixes (NLRS) uniquement dans le cadre (11) des fractions libres (SKg, Lg) des capacités de stockage de l'installation (SK) et/ou de puissance de l'installation (L) qui ne sont pas requises pour les tâches de régulation et du système fixes (LRS), l'installation de stockage d'énergie (1) comprenant une ou plusieurs unités de mesure (15) pour mesurer une ou plusieurs données pertinentes (RD) dans le réseau électrique local raccordé respectif (61, 62), et **en ce que** l'unité de commande (11) est prévue pour exécuter la commande de l'installation de stockage d'énergie (1) pour les tâches de régulation et du système fixes (LRS) dans ce réseau électrique local (61, 62) sur la base des données pertinentes mesurées (RD).

2. Installation de stockage d'énergie (1) selon la revendication 1,
**caractérisée en ce que**
le module de stockage d'énergie (11) comprend un ou plusieurs accumulateurs d'énergie à volant d'inertie (14) pour le stockage réversible d'énergie dans l'installation de stockage d'énergie.

3. Installation de stockage d'énergie (1) selon la revendication 1 ou 2,
**caractérisée en ce que**
l'installation de stockage d'énergie (1) comprend plusieurs modules de stockage d'énergie (11) dont chacun (11) comprend une unité de commande modulaire (11a, 11b, 11c) pour l'exécution de tâches assignées par l'unité de commande (13) aux différents modules de stockage d'énergie (11) via des liaisons de données correspondantes (7) dans le cadre des tâches de régulation et du système fixes et non fixes (LRS, NLRS).

4. Installation de stockage d'énergie (1) selon l'une des revendications précédentes, **caractérisée en ce que**
l'installation de stockage d'énergie (1) est prévue pour former un ensemble de régulation (4) avec d'autres installations de stockage d'énergie (1') qui sont prévues comme ensemble de régulation (4) pour une commande commune (GS) conformément aux tâches de régulation ou du système non fixes (NLRS) dans le réseau électrique non local (5) ou conformément à des tâches de régulation et du système régionales (RRS) dans un ou plusieurs réseaux électriques locaux (61, 62) et
l'installation de stockage d'énergie (1) est équipée aux fins de la communication avec les autres installations de stockage d'énergie (1') pour l'exécution de la commande commune (GS).

5. Installation de stockage d'énergie (1) selon l'une des revendications précédentes, **caractérisée en ce que**
l'installation de stockage d'énergie (1) est raccordée à l'un ou aux plusieurs réseaux électriques locaux (61, 62) et au réseau électrique non local (5) via une unité de régulation (16), l'unité de régulation (16) étant conçue pour réguler un flux d'énergie (EF, EFg, EFI) entre les réseaux électriques raccordés (5, 61, 62) et l'installation de stockage d'énergie (1), l'unité de régulation (16) étant en outre préférentiellement prévue pour séparer de l'installation de stockage d'énergie (1), en cas de besoin, un ou plusieurs des réseaux électriques raccordés (5, 61, 62).

6. Installation de stockage d'énergie (1) selon l'une des revendications précédentes, **caractérisée en ce que**
l'installation de stockage d'énergie (1) est prévue pour émettre périodiquement un signal de test (TS) via le réseau de communication (3) et recevoir un signal de retour correspondant (RS), la réception du signal de retour (RS) prouvant l'existence de la liaison vers le réseau de communication (3).

7. Installation de stockage d'énergie (1) selon la revendication 6,
**caractérisée en ce que**
l'installation de stockage d'énergie (1) comprend plusieurs interfaces (12a, 12b, 12c) vers des sous-réseaux de communication (31, 32, 33) dans le réseau de communication (3) et est conçue pour, en cas de liaison interrompue, rétablir la liaison via un sous-réseau de communication alternatif (31, 32, 33) présent dans le réseau de communication (3).

8. Installation de stockage d'énergie (1) selon la revendication 6 ou 7,
**caractérisée en ce que**
l'installation de stockage d'énergie (1) est, pendant l'inexistence d'une liaison vers le réseau de communication (3), prévue pour l'exécution exclusive (SL-A) des tâches de régulation et du système fixes (LRS) pour le ou les réseaux électriques locaux respectifs (61, 62).

9. Installation de stockage d'énergie (1) l'une des revendications précédentes, **caractérisée en ce que**
l'installation de stockage d'énergie (1) comporte une mémoire de tâches (18) pour le stockage des tâches de régulation et du système non fixes et fixes reçues (NLRS, LRS) à laquelle accède l'unité de commande (13) pour la commande de l'installation de stockage d'énergie (1) conformément aux tâches de régulation ou de système non fixes et fixes (NLRS, LRS).

10. Installation de stockage d'énergie (1) selon la revendication 9,
**caractérisée en ce que**
l'installation de stockage d'énergie (1) comprend une unité de contrôle (19) prévue pour le contrôle (PR) des tâches de régulation et du système non fixes et fixes reçues (NLRS, LRS) quant à la plausibilité et à l'origine avant le stockage (S) dans la mémoire de tâches (18) et
il n'y a stockage (S) dans la mémoire de tâches (18) qu'en cas de résultat (PE) positif (PP) du contrôle.

11. Installation de stockage d'énergie (1) selon la revendication 10,
**caractérisée en ce que**
l'unité de contrôle (19) est conçue pour envoyer, en cas de résultat (PE) négatif (NP) du contrôle, un signal d'alarme (AS) à l'unité de commande (13) et
l'unité de commande (13) est conçue pour séparer (TR), en raison du signal d'alarme (AS), l'installation de stockage d'énergie (1) des réseaux électriques raccordés (5, 61, 62).

12. Installation de stockage d'énergie (1) selon l'une des revendications précédentes, **caractérisée en ce que**
l'unité de commande (13) est conçue pour saisir et évaluer des données d'exploitation (BD) de l'installation de stockage d'énergie (1) et pour émettre, via le réseau de communication (3), un protocole de notification (MP) comprenant les données d'exploitation (BD) pour qu'au moins les données d'exploitation (BD) puissent être prises en compte pour les tâches de régulation et du système non fixes à recevoir (NLRS).

13. Procédé d'exploitation d'une installation de stockage d'énergie (1) selon la revendication 1, raccordée à un réseau de transport ou de distribution du réseau électrique public en tant que réseau électrique non local (5) pour l'exécution de tâches de régulation et du système non fixes (NLRS), incluant une fourniture d'une puissance de régulation primaire et secondaire et/ou à un ou plusieurs réseaux électriques internes d'une exploitation, réseaux électriques dans une maison ou un complexe de bâtiments ou réseaux électriques d'un parc éolien ou d'une centrale électrique solaire en tant que réseaux électriques locaux (61, 62) très limités dans l'espace pour l'exécution de tâches de régulation et du système fixes (LRS) pour améliorer une qualité de réseau locale, et ayant une capacité de stockage (SK) et une puissance (L) avec un ou plusieurs modules de stockage d'énergie (11) pour l'absorption (En) et la délivrance (Ep) d'énergie à partir des/aux réseaux électriques raccordés (5, 61, 62), comportant les étapes suivantes :
- réception (EL) des tâches de régulation et du système fixes (LRS) pour exécution dans le ou les réseaux électriques locaux raccordés (61, 62) ;
- commande (SL) de l'absorption (En) ou de la délivrance (Ep) d'énergie à partir du ou au réseau électrique local (61, 62) conformément aux tâches de régulation et du système fixes reçues (LRS) au moyen d'une unité de commande (13) dans le cadre d'une fraction (SKI, LI), prévue pour le ou les réseaux électriques locaux (61, 62), de la capacité de stockage de l'installation (SK) et/ou de la puissance (L) de l'installation de stockage d'énergie (1) ;
- réception (EG) au moins des tâches de régulation et du système non fixes (NLRS) pour exécution dans le réseau électrique non local raccordé (61, 62) via au moins une interface (12a, 12b, 12c) de l'installation de stockage d'énergie (1) reliée à un réseau de communication (3) et
- commande simultanée (SG), par la même unité de commande (13), de l'absorption (En) ou de la délivrance (Ep) d'énergie à partir du ou au réseau électrique non local (5) conformément aux tâches de régulation et du système non fixes reçues (NLRS) dans le cadre de la fraction libre (SKg, Lg) des capacités de stockage de l'installation (SK) et/ou de la puissance (L) de l'installation de stockage d'énergie (1) qui n'est pas requise pour les tâches de régulation et du système fixes (LRS),
l'installation de stockage d'énergie (1) mesurant, au moyen d'une ou de plusieurs unités de mesure (15), une ou plusieurs données pertinentes (RD) dans le réseau électrique local raccordé respectif (61, 62), et l'unité de commande (11) commandant l'installation de stockage d'énergie (1) de telle sorte que les tâches de régulation et du système fixes (LRS) sont exécutées dans ce réseau électrique local (61, 62) sur la base des données pertinentes mesurées (RD).

14. Procédé selon la revendication 13, comportant en outre les étapes suivantes :
- contrôle (PR) des tâches de régulation et du système (NLRS, LRS) reçues (EL, EG), non fixes et fixes, au moyen d'une unité de contrôle (19), quant à la plausibilité et à l'origine ;
- stockage (S) des tâches de régulation et du système (NLRS, LRS) reçues (EL, EG), non fixes et fixes, dans une mémoire de tâches (18) de l'installation de stockage d'énergie (1) en cas de résultat (PE) positif (PP) du contrôle ;
- accès (Z) de l'unité de commande locale (11) aux tâches de régulation et du système non fixes et fixes (NLRS, LRS) stockées dans la mémoire de tâches (18) pour la commande (SG, SL) de l'installation de stockage d'énergie (1) ;
- commande prioritaire (SL) de l'installation de stockage d'énergie (1) pour des tâches de régulation et du système fixes (LRS) par l'unité de commande (11) conformément aux tâches de régulation et du système non fixes et fixes (NLRS, LRS) stockées dans la mémoire de tâches (18) et
- envoi d'un signal d'alarme (AS) par l'unité de contrôle (19) à l'unité de commande (13) en cas de résultat (PE) négatif (NP) du contrôle, suite à quoi l'unité de commande (13) provoque une séparation (TR) de l'installation de stockage d'énergie (1) et des réseaux électriques raccordés (5, 61, 62).
